# EUROPÄISCHE PATENTANMELDUNG

(11) **EP 2 022 559 A2**
(43) Veröffentlichungstag der Anmeldung: **11.02.2009**
(21) Anmeldenummer: 08075848.5
(22) Anmeldetag: 10.08.2001
(51) Int. Cl.: B01J 19/00, C12Q 1/68, C07K 1/04, C07H 21/00, B01L 7/00

(54) **Nukleinsäurenbibliothek oder protein- oder peptibibliothek**

(30) Priorität: 11.08.2000 DE 10040857
(62) Teilanmeldung aus: 01964892.2
(71) Anmelder: Fürste, Jens Peter, 14195 Berlin (DE); Erdmann, Volker A., 14163 Berlin (DE)
(72) Erfinder: Fürste, Jens Peter, 14195 Berlin (DE); Erdmann, Volker A., 14163 Berlin (DE)
(74) Vertreter: Jungblut, Bernhard Jakob

(57) **Zusammenfassung**

Die Erfindung betrifft eine Nukleinsäurenbibliothek oder Protein- oder Peptidbibliothek in Form einer zweidimensional ortsaufgelösten Rasteranordnung mit einer Vielzahl von Rasterelementen, wobei jedes Rasterelement im statistischen Mittel eine definierte Anzahl von Nukleinsäuretypen oder Peptid- oder Proteintypen mit jeweils spezifischem Sequenzaufbau enthält. Sie ist dadurch gekennzeichnet, daß die Rasterelemente als Kapillarhohlräume mit zumindest einer Öffnung an einem Ende ausgebildet sind, wobei die Kapillarachsen der Kapillarhohlräume parallel zueinander stehen und wobei die Öffnungen verscheidener Kapillarhohlräume in einer Rasterfläche angeordnet sind. Die Erfindung lehrt weiterhin verschiedene Anwendungen einer solchen Bibliothek.

## Beschreibung

### Technisches Feld der Erfindung

Die Erfindung betrifft eine Nukleinsäurenbibliothek oder Protein- oder Peptidbibliothek in Form einer zweidimensional ortsaufgelösten Rasteranordnung mit einer Vielzahl von Rasterelementen, wobei jedes Rasterelement im statistischen Mittel eine definierte Anzahl von Nukleinsäuretypen oder Peptid- oder Proteintypen mit jeweils spezifischem Sequenzaufbau enthält, Verfahren zur Herstellung solcher Bibliotheken, sowie deren Verwendung.

Als Bibliothek wird eine in den Rasterelementen immobilisierte heterogene Population von Nukleinsäuren oder Proteinen oder Peptiden verstanden. Heterogen meint, daß verschiedene Nukleinsäuretypen oder Protein- oder Peptidtypen mit voneinander verschiedenem Sequenzaufbau in den Rasterelementen auf definierte ortsaufgelöste Weise verteilt sind. Ortsauflösung meint, daß mit der Position eines Rasterelements eine Information über die Sequenz oder die Sequenzen einer darin befindlichen Substanz oder mehrerer darin befindlicher Substanzen korreliert ist. Die definierte Anzahl kann 1 bis 100, vorzugsweise 1 bis 50, höchstvorzugsweise 1 bis 10, insbesondere 1, betragen. In letzterem Falle sind in einem einzelnen Rasterelement nur Nukleinsäuren oder Proteine oder Peptide ein und derselben Sequenz enthalten (oder keine dieser Substanzen; leeres Rasterelement). Immobilisiert meint in diesem Zusammenhang, daß die Nukleinsäuren, Proteine oder Peptide nicht aus den Rasterelementen ohne weiteres austreten können. Nukleinsäuren können RNA und DNA, aber auch PNA sein. Die Nukleinsäuren, Proteine oder Peptide können natürlich oder Fragmente von solchen natürlichen Substanzen sein, es ist aber ebenso möglich, nicht-natürliche Substanzen einzusetzen. Im Falle der Nukleinsäuren sind hier beispielsweise die Spiegelmere zu nennen. Aber auch chemisch modifizierte Derivate fallen unter die nichtnatürlichen Substanzen, ebenso wie nicht-natürliche Sequenzen.

### Hintergrund der Erfindung

Substanzbibliotheken werden in vielen Bereichen, beispielsweise der Molekularbiologie und der Wirkstoffindung, eingesetzt. Im Falle der Nukleinsäurebibliotheken dienen diese u.a. dazu, die Funktionen von Genen, beispielsweise in EST's codiert, zu erforschen, und zwar mit hohem Durchsatz. Im Falle der Protein-oder Peptidbibliotheken dienen diese beispielsweise in high capacity screening Verfahren zur Findung hochaffiner und hochwirksamer Pharmazeutika. Hier finden insbesondere kombinatorische Bibliotheken Einsatz. Substanzbibliotheken können aber auch dazu eingesetzt werden, physiologische Fehlfunktionen, beispielsweise mutationsbedingt, bei einem Patienten mit sehr großer Breite und Effektivität zu screenen und zu detektieren. Auch kann beispielsweise durch Expressionsvergleich wertvolle Information über genetische Varianten erhalten werden.

Eine Problematik von Substanzbibliotheken ist die Erzeugung und insbesondere Vereinzelung der einzelnen Verbindungen bzw. Verbindungstypen. Dies gilt insbeondere für die Protein- und Peptidbibliotheken, wobei die Synthese der einzelnen Verbindungen aufwendig und der geschwindigkeitsbestimmende Schritt ist. Eine andere Problematik ist die Herstellung des ortaufgelösten Immobilisats mit den einzelnen Substanzen. Im allgemeinen finden hier sequenzielle Verfahren Anwendung, welche insbesondere bei hohen Populationen der Bibliotheken, beispielsweise 10³ bis 10³, extrem zeitaufwendig und teuer sind. Sequenziell meint, daß die Rasterelemente nacheinander mit den zugeordneten Verbindungen beladen werden.

### Stand der Technik

Aus der Literaturstelle Proc. Natl. Acad. Sci., 87:6296, 1990, ist es bekannt, über Verdünnungsreihen eine Mischung von Allelen soweit zu verdünnen, daß in den Verdünnungsfraktionen jeweils nur noch ein DNA Molekül vorliegt. Diese Moleküle können dann jeweils wiederum amplifiziert und analysiert werden.

Aus der Literaturstelle Nucleic Acids Res., 26:4339, 1998, ist ein grundsätzlich ähnliches Verfahren bekannt, wobei für jedes Verdünnungsprodukt ein Element einer 384-well Platte vorgesehen ist. Nach der Amplifikation wird eine Transkription/Translation durchgeführt mit dem Ergebnis einer Proteinbibliothek.

Ohne näheren Bezug ist der Einsatz der Chip Technologie erwähnt.

Aus der Literaturstelle US-A-5,641,658 ist die sogenannte Bridge-Technologie bekannt, mittels welcher in einer Probe bestimmte Amplifikationstargets detektiert werden können. Hierzu ist auf einem flächigen Träger ein Raster, beispielsweise 10x10, eingerichtet und innerhalb jedes Rasterelements sind zwei für ein Target spezifische Primer mit 5' an der Festphase gebunden. Innerhalb der Rasterelemente findet dann, bei Vorliegen von mit den Rasterelementen korrelierten Targets in der Probe, Amplifikation statt. Der Amplifikationsfaktor ist durch die Anzahl der Primermoleküle innerhalb eines Rasterelements begrenzt.

Aus der Literaturstelle Nucleic Acids Res., 27:e34, 1999, ist es bekannt, Acrylamid in einer PCR-Reagentien und in sehr geringer Konzentration DNA enthaltenden Lösung zu einem Gel zu polymerisieren. Hiernach wird die Amplifikation durchgeführt. Dabei entstehen aus den immobilisierten und lateral verteilten DNA Molekülen ebenfalls immobilisierte DNA Kolonien enthaltend jeweils identische DNA.

In der Literaturstelle DE 198 54 946.6-42 ist ein Verfahren zum Klonieren und zum Kopieren genetischen oder anderen biologischen Materials an Oberflächen bekannt, wobei die zu kopierenden Substanzen auf einer Festkörperoberfläche immobilisiert sind und die Kopie durch Amplifikation bzw. Bindung komplementärer Substanzen mit subsequentem Übertragen und Binden an eine gegenüberliegende Festkörperoberfläche erfolgt.

In einer Vielzahl von Literaturstellen sind DNA-Chips beschrieben, welche in einem engen Rastermaß DNA Bibliotheken tragen. Die Herstellung erfolgt meist photolithographisch, wobei das "Auffüllen" der Rasterelemente sequentiell durchgeführt wird. Lediglich beispielhaft wird auf die Literaturstellen US-A-5,744,305, US-A-5,424,186, US-A-5,412,087 und US-A-6,022,963 verwiesen.

Dem im Wege der Verdünnungsreihen arbeitenden vorstehenden Stand der Technik ist gemeinsam, daß die Herstellung der Verdünnungsreihen und die Handhabung der einzelnen Verdünnungsfraktionen umständlich und aufwendig ist. Dieser Nachteil wächst überproportional mit der Anzahl der Verdünnungsfraktionen.

Dem mit an Festkörperoberflächen immobilisierten Substanzen arbeitenden Stand der Technik haftet der Nachteil an, daß alle Reaktionen an Oberflächen und nicht im Lösungsvolumen ablaufen. Dadurch werden gegenüber Reaktion in Lösung nur geringe Umsatzraten erzielt.

Bei dem vorstehenden Verfahren mit einem Polyacrylamidgel findet zwar eine Reaktion im Volumen statt, die Umsatzraten sind jedoch dennoch unbefriedigend gering, da die Reaktionen diffusionskontrolliert ablaufen und die Diffusionskoeffizienten sehr niedrig sind ("Quasiimmobilisierung" aufgrund des Gelzustandes).

Schließlich ist es in der Regel bei den bekannten Bibliotheken nicht möglich, auf einfache Weise Kopien herzustellen bzw. deren Vervielfältigung durchzuführen.

### Technisches Problem der Erfindung.

Der Erfindung liegt gegenüber dem Stand der Technik das technische Problem zugrunde, eine Substanzbibliothek in Form einer zweidimensional ortsaufgelösten Rasteranordnung anzugeben, welche unkompliziert herstellbar ist, in deren Rasterelemente Reaktionen mit sehr hohen Umsatzraten stattfinden können, und die sich unkompliziert vervielfältigen läßt.

### Grundzüge der Erfindung

Zur Lösung dieses technischen Problems lehrt die Erfindung, daß die Rasterelemente als Kapillarhohlräume mit zumindest einer Öffnung an einem Ende ausgebildet sind, wobei die Kapillarachsen der Kapillarhohlräume parallel zueinander stehen und wobei die Öffnungen verscheidener Kapillarhohlräume in einer Rasterfläche angeordnet sind. Als Kapillarhohlräume sind Hohlräume bezeichnet, in welchen bei Kontaktierung der Öffnung mit einer wäßrigen Lösung Kapillaraszension stattfindet, i.e. wobei die Kohäsionskräfte in der wäßrigen Lösung kleiner als die Adhäsionskräfte der wäßrigen Lösung zur Kapillarinnenoberfläche sind. Mit anderen Worten ausgedrückt, die Kapillarinnenoberfläche ist von der wäßrigen Lösung benetzbar und hinsichtlich der werkstoffoberfläche entsprechend ausgestattet. Ein erfindungsgemäßes Rasterelement besteht demzufolge gleichsam aus einem Bündel paralleler, zumindest einseitig offener Kapillaren. Die Rasterfläche kann eben oder ein- oder zweidimensional gekrümmt sein. In jedem Fall erhält man im Bezugssystem der Rasterfläche eine zweidimensionsal ortsaufgelöste Zuordnung Substanz/Rasterelement.

Die Herstellung einer solchen Nukleinsäurebibliothek ist besonders einfach möglich, nämlich mit dem erfindungsgemäßen Verfahren zur Herstellung einer Nukleinsäurenbibliothek in Form einer zweidimensional ortsaufgelösten Rasteranordnung mit einer Vielzahl von Rasterelementen, wobei jedes Rasterelement im statistischen Mittel eine definierte Anzahl an Nukleinsäuretypen mit spezifischer Sequenzinformation enthält, und wobei in verscheidene Rasterelemente eingebrachte Fluide nicht miteinander kommunizieren, mit folgenden Verfahrensschritten: a) es wird eine zweidimensionale Rasteranordnung aus als Öffungen aufweisende Hohlräume ausgebildeten Rasterelementen gebildet, b) die Öffnungen der Hohlräume werden mit einer Nukleinsäuren enthaltenden Lösung in Kontakt gebracht, wobei unter Mitwirkung von Kapillarkräften in jedes Rasterelement eine Teilmenge der Lösung angesaugt wird, c) die Öffnungen der Hohlräume werden von der Lösung getrennt, d) es wird eine Trocknungsverfahrenstufe durchgeführt, e) und, optional, die Rasteranordnung wird insgesamt einer Amplifikationsverfahrensstufe unterworfen, wobei die Konzentration der Nukleinsäuren in der Lösung und die Dimensionierung der Hohlräume und deren Öffnungen in Hinblick auf die Größe der in ein Rasterelement angesaugten Teilmenge mit der Maßgabe aufeinander abgestimmt sind, daß die in ein Rasterelement aufgesaugte Teilmenge an Lösung im statistischen Mittel eine definierte Anzahl, insbesondere 1, an Nukleinsäuremoleküle enthält. Mit anderen Worten ausgedrückt, die Rasterfläche wird mit einer verschiedene Nukleinsäuren in größeren Mengen enthaltenden Lösung, beispielsweise aus einer Zellpräparation oder einer "Eintopf"-Bibliothek, in Kontakt gebracht. Bei bekannter Nukleinsäurengesamtkonzentration und bekannter Steighöhe der Lösung in der Kapillaren läßt sich mit dem Kapillarenquerschnitt das angesaugte Volumen und somit die Menge bzw. Anzahl der angesaugten Nukleinsäuremoleküle berechnen. Hierbei sind die Dimensionierungen durch einfache Berechnung und/oder einfach Versuche so zu treffen, daß rechnerisch im Mittel eine gewünschte Anzahl an Nukleinsäuremolekülen aufgenommen wird. Unter Ansatz der Poisson Verteilung bedeutet dies im Falle eines im statistischen Mittel einzelnen Moleküls bei exakter Betrachtung, daß 36,8% der Rasterelemente kein Nukleinsäuremolekül, 36,8% der Rasterelemente ein einzelnes Nukleinsäuremolekül und der Rest mehr als ein Nukleinsäuremolekül enthalten. Eine Überprüfung ist leicht möglich, indem, ggf. nach Amplifikation, der Anteil der leeren Rasterelemente ausgezählt wird. Im Rahmen der Erfindung soll beispielsweise das Kriterium "im statistischen Mittel 1 Molekül pro Rasterelement" als erfüllt betrachtet werden, wenn 10% bis 90%, vorzugsweise 10% bis 60%, höchstvorzugsweise 20% bis 45%, der Rasterelemente leer sind. Bei Ansatz von mehr als einem Molekül prto Rasterelement kann eine Überprüfung dadurch erfolgen, daß mittels der Statistik die ANzahl der Rasterelemente mit der gewünschten (definierten) Anzahl berechnet wird. Als unter die in Einzelfalle definierte Anzahl fallend wird dann die mit der statistischen Verteilung berechnete Anzahl Rasterelemente mit der gewünschten Anzahl an Molekülen +100% und -70% angesehen. Nach der subsequenten Trennung von der Lösung wird die Trocknungsverfahrensstufe durchgeführt, welche darin besteht, daß von den Flächen zwischen den Öffnungen Lösung entfernt wird, beispielsweise durch IR-Trocknung aber auch beispielsweise durch Tupfen mit einem hydrophobierten Tupfer. Wenn eine Amplifikationsverfahrenstufe durchgeführt wird, so empfiehlt es sich, die hierfür erforderlichen Reagentien der Lösung vor dem Kontaktieren der Rasterfläche zuzumischen.

Im Ergebnis wird eine definierte Verdünnung, die zudem mit extremen Verdünnungsfaktoren durchgeführt werden kann, und Füllung aller Rasterelemente mit den Verdünnungsfraktionen in einem sehr einfachen Arbeitsschritt simultan erreicht. Die Rasterelemente werden nicht zeitaufwendig sequentiell, sondern vielmehr parallel beladen. Dies erlaubt ohne zeitlichen Mehraufwand die Erstellung von Bibliotheken von nahezu beliebig hohen Populationen, deren Größe nur durch die konstruktive Gestaltung der Rasterelemente begrenzt ist. Zugleich ist als Vorteil gegeben, daß Reaktionen, z.B. Amplifikation, Transkription und/oder Expression, stets in Lösung durchgeführt werden können, wodurch hohe Umsatzraten gewährleistet sind. Schließlich kann beispielsweise PCR quantitativ durchgeführt werden ebenso wie LCR.

Weiterhin lehrt die Erfindung ein Verfahren zum Kopieren einer erfindungsgemäßen Nukleinsäurenbibliothek, wobei alle oder ein Teil der Rasterelemente einer mit Nukleinsäuren beladenen Rasteranordnung und alle oder ein Teil der Rasterelemente einer leeren Rasteranordnung in definierter Ausrichtung zueinander hinsichtlich der zweidimensionalen Ortsauflösung mit ihren jeweiligen Öffnungen miteinander verbunden werden, wobei entweder dann a) ggf. eine Mobilisierung der Nukleinsäuren in der beladenen Rasteranordnung durchgeführt wird, b) eine Reaktionslösung für eine Amplifikationsverfahrensstufe in die miteinander verbundenen Rasterelemente der beiden Rasteranordnungen eingebracht, und c) eine Amplifikationsverfahrensstufe durchgeführt wird, oder dann eine Übertragung von Nukleinsäuren in verbundene Rasterelemente der leeren Rasteranordnung durch a') ggf. Mobilisierung der Nukleinsäuren in der beladenen Rasteranordnung, und b') ein Transport der mobilisierten Nukleinsäuren aus der beladenen Rasteranordnung in die leere Rasteranordnung durchgeführt wird, wobei dann die beiden Rasteranordnungen voneinander getrennt werden, und wobei optional vor oder nach der Trennung eine Immobilisierung der Nukleinsäuren in der zuvor leeren Rasteranordnung durchgeführt wird. Es versteht sich, daß bei ausschließlicher Nutzung von Kapillarkräften die horizontale Projektion der Steighöhe der Reaktionslösung auf eine Längenkoordinate eines Rasterelements größer als die Länge eines Rasterelementes sein muß, damit die Reaktionslösung bis in das angeschlossene Rasterelement steigen kann. Die Steighöhe sollte insofern eine vollständige Füllung beider miteinander verbundener Rasterelemente gewährleisten. Selbstverständlich kann die Übertragung auch unter Einsatz zusätzlicher Kraftfelder, beispielsweise magnetischer oder elektrischer Kraftfelder (unter Einsatz angepaßter, für Wechselwirkung mit den Kraftfeldern modifizierten Nukleinsäuren) aber auch Schwerefelder (Zentrifugation), erfolgen. Eine erfindungsgemäße Bibliothek kann in Ergebnis auf sehr einfache Weise vervielfältigt bzw. Übertragen werden, da auch die Übertragung bzw. Duplizierung der Rasterelementinhalte parallel und nicht sequenziell erfolgt. Es kann grundsätzlich mit beliebigen Anfangs- und Endkonzentrationen an Nukleinsäuren gearbeitet werden. Modulation durch Auswahl der Stringenzbedingungen ist zudem möglich.

Schließlich umfaßt die Erfindung u.a. die Verwendung einer erfindungsgemäßen Nukleinsäurebibliothek zur Herstellung einer Protein- oder Peptidbibliothek, wobei in die Rasterelemente der Nukleinsäurebibliothek ein Expressionsmix unter Mitwirkung von Kapillaraszension eingebracht wird und die Expressionsreaktionen durchgeführt werden. Auf diese Weise lassen sich ebenfalls auf parallelem Wege Protein- und Peptidbibliotheken erstellen. Ebenso lassen sich bei vorheriger Zugabe eines Assaymix zum Expressionsmix die Bildung von bestimmten Expressionprodukten detektieren.

Weitere Verwendungsmöglichkeiten der Erfindung werden später im Rahmen von Ausführungsbeispielen im einzelnen erläutert. In aller Allgemeinheit umfassen diese weiteren Verwendungsmöglichkeiten: Klonierung und Subklonierung chromosomaler Nukleinsäure-Fragmente, Sortierung von Nukleinsäurefragmenten (Chromosome Walking), automatisierte Sequenzierung, quantitative PCR und RT-PCR, Expressionsanalysen, Analyse von Polymorphismen, Design neuer Aptamere und Ribozyme, Design von funktionellen Proteinen, wie hochaffinen Proteinen, (z.B. Antikörper) und Enzymen, Target-Identifizierung durch Screening genomischer Bibliotheken und Kandidaten-Identifizierung durch Screening genomischer Bibliotheken.

Die Herstellung einer Nukleinsäuren enthaltenden Lösung mit heterogener Population kann auf die verschiedensten Weisen erfolgen. Beipiele lassen sich beispielsweise den Literaturstellen Nucl. Acids Res., 17:3645, 1989, (Amplifikation genomischer Fragmente), Nucl. Acids Res., 18:3203, 1990, und Nucl. Acids Res., 18:6197, 1990, (chemische Festphasensynthese von DNA Molekülen in Syntheseautomaten). Die Anzahl der Mitglieder der Population kann grundsätzlich beliebig sein, es wird sich jedoch empfehlen, die Anzahl in der Größenordnung der Anzahl der Rasterelemente einer Rasteranordnung zu wählen.

### Ausführungsformen der Erfindung.

Im folgenden werden beispielhaft verschiedene Ausführungsformen der Erfindung erläutert.

Die Rasterelemente können grundsätzlich die verschiedensten Innenquerschnitte aufweisen. Aus Gründen der einfachen Herstellbarkeit ist es bevorzugt, wenn die Rasterelemente als vorzugsweise im wesentlichen zylinderförmig geformte Kapillarhohlräume ausgebildet sind.

Das Verhältnis der Länge zur Breite der Kapillarhohlräume liegt typischerweise im Bereich von 2 bis 500, vorzugsweise von 2 bis 20, höchstvorzugsweise von 5 bis 10. Als Breite ist das größte Maß in einer Ebene orthogonal zur Kapillarlängsachse bezeichnet. Die Breite der Kapillarhohlräume liegt typischerweise im Bereich von 0,1µm bis 1000µm, vorzugsweise von 0,1µm bis 100µm, höchstvorzugsweise von 0,1µm bis 10µm. Kleine Breiten gewährleisten einerseits eine hohe Dichte der Rasterelemente und andererseits eine hohe Steighöhe. Breite und Länge können in Abstimmung mit dem Material der Kapillarinnenfläche so gewählt sein, daß die Steighöhe bei orthogonal zur Flüssigkeitsoberfläche orientierter Kapillare zumindest so groß wie die Länge ist. Die Steighöhe läßt sich auch ggf. durch Zugabe von die Oberflächenspannung beeinflussenden Additiven zur Lösung erhöhen oder erniedrigen. Gleichfalls kann über die Benetzung der Kapillareninnenfläche modifizierende Beschichtungen der Kapillareninnenfläche die Steighöhe beeinflußt werden. Eine Verringerung bzw. Verhinderung des Umgriffs um die Kanten der Öffnungen kann durch Zugabe von die Viskosität der Lösung modifizierenden (erhöhende) Additiven zur Lösung erfolgen. Nicht orthogonal zur Flüssigkeitsoberfläche orientierte Kapillaranordnungen sind selbstverständlich ebenfalls möglich. Die laterale Dichte der Rasterelemente liegt typischerweise im Bereich von 1/mm² bis 10³-/mm², vorzugsweise von 10³/mm² bis 10³/mm², höchstvorzugsweise von 10⁴/mm² bis 10⁵/mm².

Bevorzugt ist es, wenn die Kapillarhohlräume beidendig offen sind und wobei die jeweils einander gegenüberliegenden Öffnungen zueinander parallele Rasterflächen bilden. In diesem Fall ist eine stets vollständige Füllung der Kapillaren gewährleistet, sofern die Steighöhe bzw. das Kraftfeld ausreichend ist. Zudem läßt sich das erfindungsgemäßen Verfahren zum Kopieren dann besonders einfach ausüben.

Das Strukturmaterial der Rasterelemente kann ausgewählt sein aus der Gruppe bestehend aus "metallische Werkstoffe, oberflächenpassivierte metallische Werkstoffe, Keramikwerkstoffe, Gläser, Polymerwerkstoffe und Kombinationen dieser Werkstoffe". In jeden Fall ist zu gewährleisten, daß die Innenfläche der Rasterelemente zumindest z.T. keine hydrophoben Eigenschaften aufweist. Bei der Werkstoffauswahl ist auch darauf zu achten, daß der Werkstoff die durchzu- führenden Reaktionen nicht stört. Als metallische Werkstoffe kommen beispielsweise Cr-Ni-Stähle und Gold in Frage. Ein oberflächenpassivierter metallischer Werkstoff ist Aluminium einschließlich der üblichen technischen Legierungen. Hinsichtlich der keramischen Werkstoffe sind neben Tonzeug insbesondere die Oxid- Glas und Graphitkeramiken zu nennen. Allen diesen Gruppen ist eine sehr geringe Porosität gemeinsam. Als Gläser kommen alle labortechnisch üblichen Gläser in Frage. Geeignete Polymerwerkstoffe sind beispielsweise: HDPE, PET, PC und PP. Die Rasteranordnung kann dahingehend weitergebildet sein, daß die Flächen zwischen den Öffnungen hydrophobiert sind, beispielsweise mittels Beschichtung mit üblichen Hydrophobierungsmitteln auf Flour- und/oder Silikonbasis. Es ist auch zweckmäßig, wenn die Kanten der Öffnungen möglichst geringe Kantenradien aufweisen. Beides trägt zur Vermeidung eines Umgriffs der Kanten durch Lösung und folglich Querkontamination zwischen verschiedenen Rasterelementen bei.

Die Rasterelemente können innenseitig oberflächenmodifiziert sein mit Ankerstellen, vorzugsweise mit kovalenten Bindungsstellen, für Nukleinsäuren oder ) Proteine oder Peptide. Die Immobilisierung kann beispielsweise mittels Biotin/Streptavidin erfolgen. Dann lassen sich, beispielsweise nach einer Amplifikation oder einer Expression Waschverfahrensstufen anwenden, mit welchen Reaktionsmittel aus den Rasterelementen herausgespült werden.

### Herstellungsverfahren für Rasteranordnungen

) Erfindungsgemäß einsetzbare Rasteranordnungen können auf die verschiedensten Weisen hergestellt werden.

Eine erste Methode besteht darin, handelsübliche Glaskapillaren vorgegebener Länge dicht zu packen, wobei die beiden Kapillarenden mit ihren Öffnungen jeweils zwei zueinander parallele Rasterflächen bilden. Auf gleiche Weise kann mit handelsüblichen Metallkapillaren, ggf. mit einer Innenbeschichtung versehen, verfahren werden. Wenn die Länge der erhältlichen Kapillaren größer als gewünscht ist, so kann eine aus den Kapillaren gebildete Packung in Richtung orthogonal zu den Kapillarenachsen geschnitten werden, wodurch Kapillarenplatten mit Rasterelementen geringer Länge entstehen.

Ebenso einsetzbar sind fertige Kapillarplatten, wie beispielsweise Mikrokanalplatten der Firma Hamamatsu Photonics Deutschland GmbH. Diese Platten weisen eine Vielzahl von orthogonal zu den Hauptflächen verlaufende einander gleichende Kanäle mit einem Kanaldurchmesser von bis zu 10µm hinunter auf.

Kapillarplatten können auch beispielsweise durch selektives Ätzen von Glasplatten hergestellt werden. Eine andere Technik zur Erzeugung von Mikrokanälen bzw. Kapillaren ist Laserbohren. Hiermit lassen sich in nahezu beliebigen Werkstoffen Kapillaren mit sehr großer Genauigkeit hinsichtlich Innendurchmesser und Rasteranordnung erzeugen.

Auch unter Verwendung von im Bereich der Halbleiterindustrie üblichen Verfahren zur Erzeugung von Topographien können Kapillarplatten erzeugt werden. Hier kommen insbesondere phototechnische Verfahren in Frage. Kapillaren mit extrem geringem Innendurchmesser und extrem hoher Dichte lassen sich dabei beispielsweise mittels Belichtungsverfahren erzeugen, welche mit Synchrotronstrahlung arbeiten. Im einzelnen wird ergänzend auf die einschlägige Fachliteratur zur Herstellung von Halbleitertopographien verwiesen.

### Assay-Formate

Zum Nachweis von Rasterelementinhalten, Reaktionen und/oder Wechselwirkungen der Rasterelementinhalte können grundsätzlich die verschiedensten fachüblichen Verfahren eingesetzt werden. Dies sind beispielsweise: UV-scanning, Molecular Beacons, Exonuclease Probes, Szintillation Proximity Assay, Fluorescence Resonance Energy Transfer, Homogenous Time-Resolved Fluorescense, Fluorescence Polarisation, Filter Binding Assay, Massenspektrometrie, MALDI-TOF und NMR. Es versteht sich, das die jeweils eingesetzten Detektoren für eine entsprechend der Rasteranordnung ausreichend feine Ortsauflösung eingerichtet sein müssen. Im Falle der Verwendung von Glaswerkstoffen in Verbindung mit optischen Nachweismethoden ist darauf zu achten, daß kein "Übersprechen" der Signale aus verschiedenen Rasterelementen möglich ist, beispielsweise durch Einsatz von opaken Gläsern. Die Auslesung kann parallel oder sequenziell erfolgen. Eine parallele Auslesung kann beispielsweise mittels CCD-Elementen ausreichend hoher Pixeldichte oder mittels Filmen erfolgen, ggf. mit zwischenschaltung geeigneter Optiken. Eine sequentielle Auslesung kann durch subsequentes "Anfahren" der einzelnen Rasterelemente erfolgen, beispielsweise durch mechanische Verschiebung von Detektoren und/oder ggf. zwischengeschalteter Optiken. Hinsichtlich der verschiedenen Assay Formate wird ergänzend auf die einschlägige Fachliteratur verwiesen.

In jedem Fall muß eine zuverlässige Zuordnung eines Signals zu einem bestimmten Rasterelement möglich sein. Hierzu empfiehlt es sich, Referenzortspunkte einzurichten. Eine sehr einfache Möglichkeit besteht in der Einrichtung einer oder zwei mechanisch ausreichend genau gearbeiteten Referenzkanten an einem Rand oder zwei Rändern der Rasteranordnung. Diese Referenzkanten brauchen dann nur mit korrespondierenden Anschlagelementen der jeweiligen Apparaturen in Anschlag gebracht zu werden und mit der bekannten Geometrie der Anordnung der Rasterelemente ist dann eine zuverlässige Zuordnung von Ortskoordinaten zu den Rasterelementen möglich. Es sind natürlich auch die verschiedensten anderen mechanischen Ausführungen zur Positionierung von Bauelementen einsetzbar, beispielsweise eigenständige Anschlagelemente und/oder Formschlußelemente, auch in oder an den Hauptflächen Rasteranordnung. Die exakte Ausrichtung ist im übrigen nicht nur bei der Detektion elementar, sondern auch bei der Herstellung von Kopien. Hier müssen die Vorlage-Rasteranordnung und die Kopie-Rasteranordnung exakt gegeneinander ausgerichtet sein.

Referenzpunkte können aber auch nicht-mechanisch sein. So ist es möglich in der Ebene einer Rasterfläche an definierten Orten ein oder zwei oder mehrere signalgebende Elemente einzurichten, welche anhand eines Detektors ortsaufgelöst detektiert werden. Mit den detektierten signalgebenden Elementen ist dann die Gesamtposition der Rasteranordnung und somit der einzelnen Rasterelemente bekannt. Signalgebende Elemente können beispielsweise im Rahmen eines Rasterelements, aber auch zwischen Rasterelementen geschaffen sein. Es empfiehlt sich, die signalgebenden Elemente so auszuwählen, daß die davon emittierten Signale mit dem gleichen Detektor gemessen werden, wie zur Messung von Messignalen as den Rasterelementen.

Bindung von Substanzen an Rasterelementinnenflächen.

In bestimmten Zusammenhängen kann es sich empfehlen, die Nukleinsäuren, Proteine oder Peptide an der Rasterelementinnenfläche zu verankern bzw. zu immobilisieren. Dies ist insbesondere dann notwendig, wenn Waschverfahrensschritte zwischengeschaltet werden sollen. Hierzu wird typischerweise die Innenfläche oberflächenmäßig modifiziert. Alle fachüblichen Methoden sind geeignet.

Im folgenden werden weitere Ausführungsformen der Erfindung, insbesondere auch Verwendungen, anhand der Figuren näher erläutert.

Es zeigen:
- Figur 1:: Herstellung einer Nukleinsäurebibliothek,
- Figur 2:: Kopieren einer Nukleinsäurebibliothek,
- Figur 3:: Expression einer Nukleinsäurebibliothek,
- Figur 4:: Übertragung bzw. Kopie einer Nukleinsäurebib- liothek auf einen flächigen porösen oder nicht-porösen Träger,
- Figur 5:: Verfahren zum vollständigen Füllen einseitig geschlossener Rasteranordnungen,
- Figur 6:: Verfahren zum Prizessieren einzelner Rasterelemente,
- Figur 7:: Verfahren zur Klonierung von Nukleinsäuren mit immobilierten Primern,
- Figur 8:: Verfahren zum vertikalen Kopieren einer Nuk- leinsäurebibliothek mit immobilisierten Primern,
- Figur 9:: Verfahren zum horizontalen Kopieren einer Nukleinsäurebibliothek,
- Figur 10:: Verfahren zur Prozessierung einer Teilmenge der Rasterelemente einer Rasteranordnung,
- Figur 11:: Verwendung des Kopierverfahrens zur Herstel- lung von Bibliotheken mit permutierter Ord- nung der Rasterelementinhalte,
- Figur 12:: Verfahren zum Ordnen von Rasterelementinhalten,
- Figur 13:: ein alternatives Verfahren zum Ordnen von Rasterelementinhalten,
- Figur 14:: Verfahren zum Verkleinern von Bibliotheken im Zuge eines Kopiervorgangs,
- Figur 15:: Verfahren zum Prozessieren von Nukleinsäure- bibliotheken mit Verlängerung der Nuklein- säuren in den Rasterelementen,
- Figur 15a:: Verfahren zur Verlängerung von Nuklein- säuren in verschiedenen Rasterelementen,
- Figur 16:: Verfahren zur Verkürzung und Rekombination von Nukleinsäuren,
- Figur 17:: Darstellung verschiedener Deletionsmutanten, erhältlich mit Verfahren gemäß der Figuren 15, 15a oder 16,
- Figur 18:: Verfahren zur in-situ Rekombination von ge- netischen Elementen,
- Figur 19:: Verfahren zur Herstellung eines Genchips,
- Figur 20:: Verfahren entsprechend Fig. 19 mit zusätzli- chem Einsatz eines elektrischen Kraftfeldes,
- Figur 21:: Vorrichtung zum parallelen Durchströmen einer oder mehrer Rasteranordnungen,
- Figur 22:: Vorrichtung zum sequenziellen Durchströmen einer oder mehrer Rasteranordnungen,
- Figur 23:: einen Gegenstand nach Fig. 21 in einer Aus- führungsform mit Echtzeitmessung in den Rasterelementen,
- Figur 24:: einen Gegenstand nach Fig. 22 in einer Aus- führungsform mit Echtzeitmessung in den Rasterelementen und
- Figur 25:: Verfahren zur parallelen Sequenzierung von Nukleinsäuren, Proteinen oder Peptiden.

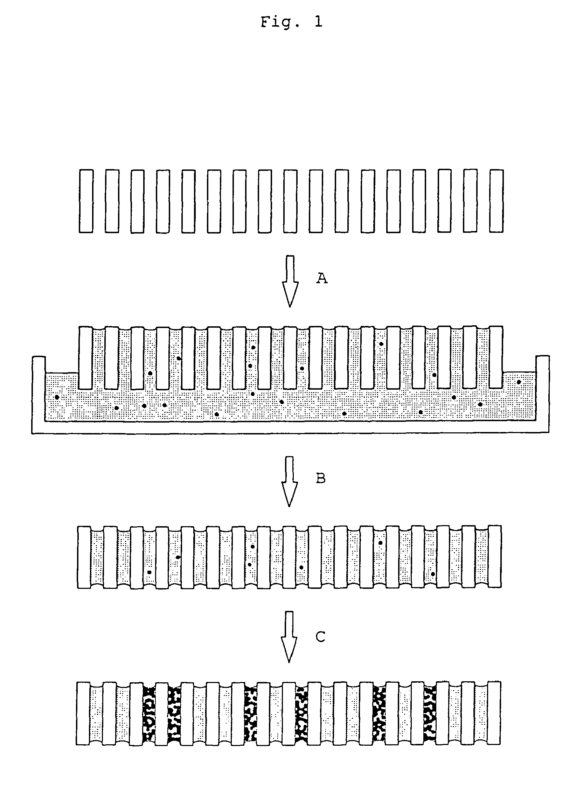

In der Figur 1 ist die Herstellung einer Nukleinsäurebibliothek dargestellt. Zunächst erfolgt eine chemische Synthese einer DNA-Bibliothek mit beispielsweise 60 randomisierten Positionen. Dann erfolgt eine Verdünnung der Bibliothek und die Beladung der Rasteranordnung. Im Ausführungsbeispiel wird dabei lediglich die Kapillarkraft genutzt. Nach dem Befüllen erfolgt eine partielle Gefriertrocknung. Eine Erhöhung der Nukleinsäurekonzentrationen in den Rasterelementen erfolgt mittels PCR in Gegenwart von Ethidiumbromid. Die Identifizierung der Rasterelemente wird mit Amplifikaten durch Flureszenzmikroskopie (Anregung bei 300 nm und Messung bei 600 nm) durchgeführt. Die Entnahme der klonierten Amplifikate erfolgt über eine Mikrokapillare und Überführung in Standard PCR-Ansätze. Die Analyse der Amplifikate erfolgt durch Standard-Didesoxy-Sequenzierung. Mit dem Ergebnis wird ein Vergleich mit derSequenzierung der Ausgangsbibliothek (Durchgehende Banden in allen vier Sequenzierungsspuren) durchgeführt. Schließlich erfolgt eine Einführung von immobilisierbaren Primern.

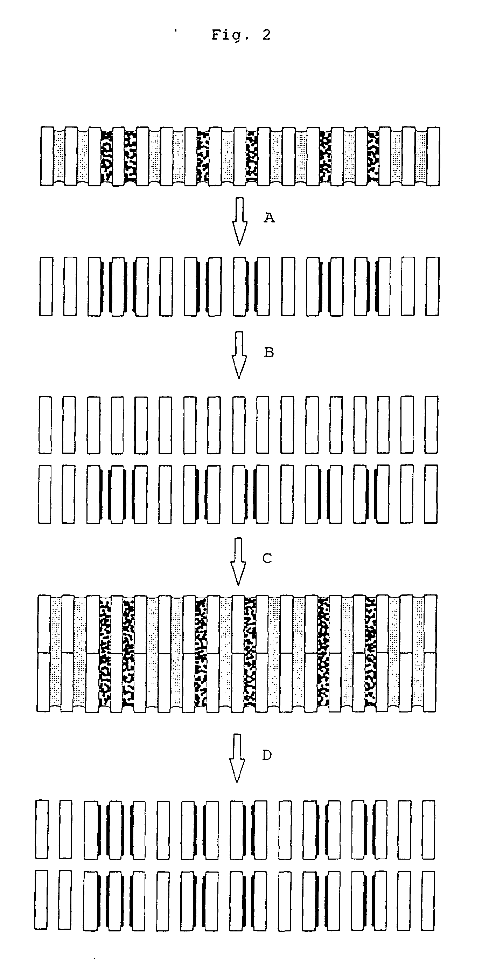

Die Figur 2 zeigt das Kopieren einer Nukleinsäurebibliothek. Zunächst wird eine Vorlage-Rasteranordnung nach Figur 1 durch PCR ohne Ethidiumbromid erstellt. Dann erfolgt eine vollständige Vakuum-Trocknung. An die so erhaltene Vorlage erfolgt ein Ansetzen einer zweiten Rasteranordnung unter Ausrichtung von zwei Referenzkanten. Dann wird wiederum eine PCR und eine vollständige Vakuumtrocknung durchgeführt. Nach Zugabe einer Ethidiumbromid-haltigen Lösung zu beiden Rasteranordnungen wird eine partielle Gefriertrocknung durchgeführt. Die Analyse der Rasterelemente erfolgt durch Flureszenzmikroskopie (Anregung bei 300 nm und Messung bei 600 nm). Die Entnahme der klonierten Amplifikate erfolgt mittels Mikrokapillare. Anschließend werden diese in Standard PCR-Ansätze überführt. Die Analyse der Amplifikate erfolgt durch Standard-Didesoxy-Sequenzierung. Die Amplifikate in der Vorlage- und der Kopie-Rasteranordnung werden verglichen.

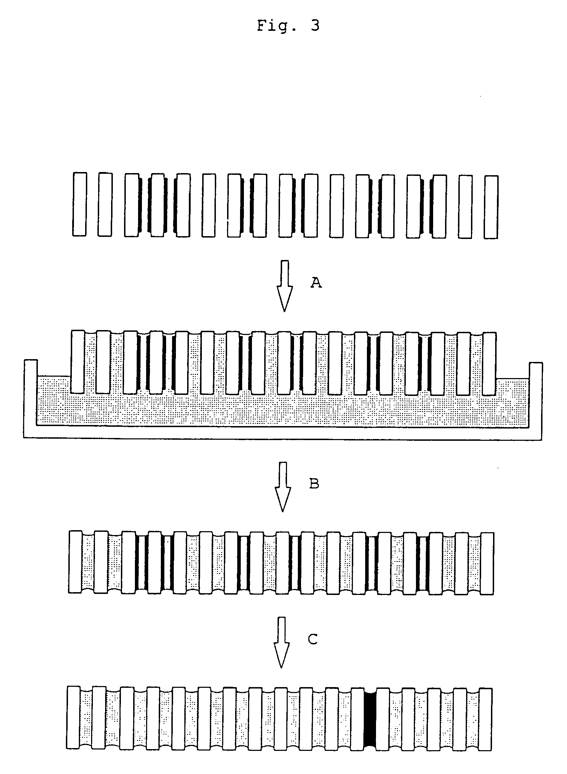

In der Figur 3 ist die Expression einer Nukleinsäurebibliothek dargestellt. Zunächst erfolgt eine Erstellung einer Rasteranordnung nach Figur 1 mit einem DNA-Fragment, das für einen Single-Chain-Antikörper kodiert. Dann erfolgt eine Erstellung von Kopien der Rasteranordnung nach Figur 2, gefolgt von einer vollständigen Vakuum-Trocknung. Die DNA-haltigen Rasterelemente werden in der Vorlage-Rasteranordnung durch Ethidiumbromid-Färbung identifiziert. Einer Kopie-Rasteranordnung wird Expressionsmix mit ³H-markiertem Lysin zugegeben. Nach Filtration der Rasteranordnung durch PVDF-Membran erfolgt ein Waschen und Trocknen der Membran. sowie eine Autoradiographie. Der Nachweis der Expression erfolgt durch Vergleich von Vorlage- und Kopie-Rasteranordnung (identische Muster für DNA und Protein).

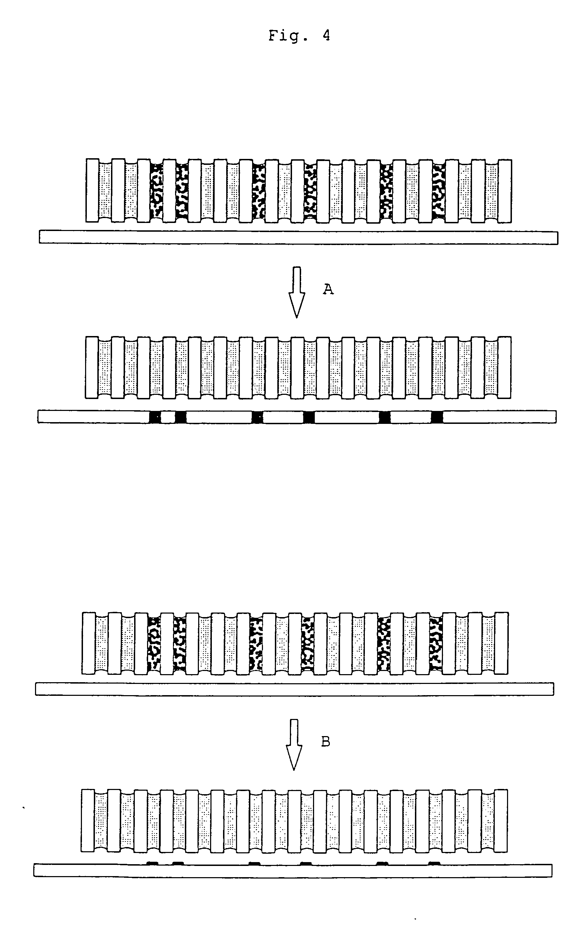

Die Figur 4 beschreibt ein Verfahren zur Übertragung von Nukleinsäuren, Proteinen oder Peptiden auf (A) eine poröse Oberfläche (Membran) oder (B) eine nicht poröse Oberfläche. Die Oberflächen können aus halbmetallischen oder metallischen Werkstoffen, Keramikwerkstoffen, Gläsern, Polymerwerkstoffen oder Kombinationen dieser Werkstoffe bestehen. Die Übertragung kann durch elektrisches Feld, magnetische Wechselwirkung oder

Zentrifugation erfolgen. Bei porösen Oberflächen kann die Übertragung auch durch Unter- bzw. Überdruck erfolgen (Filtration). Zur Erleichterung der Übertragung von kleinen Nukleinsäuren, Proteinen oder Peptiden bei Zentrifugation oder Filtration können Micro- oder Nanobeads eingesetzt werden (beispielsweise können Proteine mit N-terminalem Biotin im Expressionssystem gemäß Figur 3 synthetisiert werden, die an zugesetzte Streptavidin-Nanobeads binden).

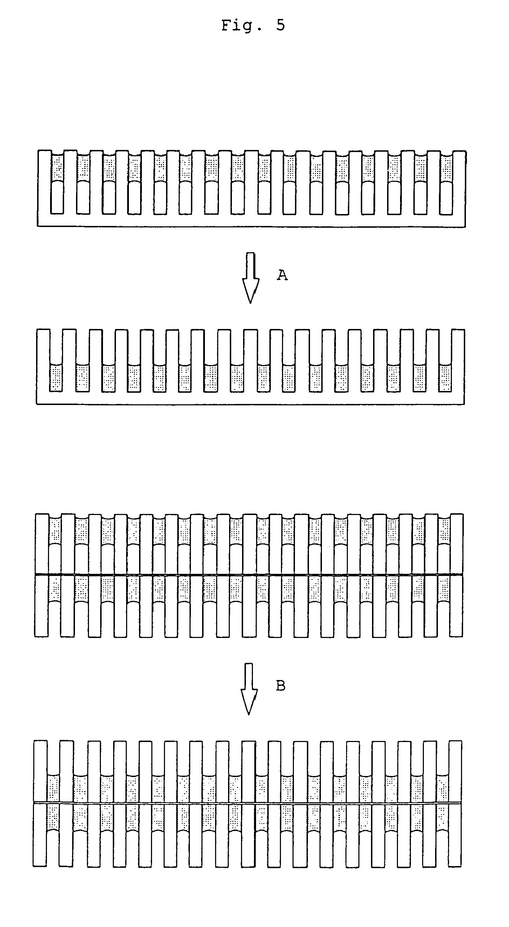

Die Figur 5 beschreibt ein Verfahren zum vollständigen Füllen einseitig verschlossener Rasteranordnungen. (A): Nach Auftrag der Flüssigkeit kann die Kapillaranordnug im Zentrifugalfeld beschleunigt werden, bis die Flüssigkeit den Boden der verschlossenen Rasterelemente erreicht. (B): Bei zwei Kapillaranordnungen, die durch Dialysemembranen getrennt werden, wird zunächst eine erste Seite durch Zentrifugation, wie unter (A) beschrieben, gefüllt. Die zweite Seite der Kapillaranordnung wird in einem zweiten Zentrifugationsschritt bis zur Membran gefüllt. Ein Austreten der Flüssigkeit aus den Elementen der ersten Seite kann durch Verschluss der ersten Seite verhindert werden. Vorzugsweise werden zwei verschiedene Rasteranordnungen gewählt. Die Adhäsion der Flüssigkeit in den Rasterelementen der ersten Seite ist größer als die der zweiten Seite (kleinerer Kapillardurchmesser oder Material mit höherer Adhäsion). Das Auslaufen der bereits gefüllten Kapillaranordnung wird durch Wahl geeigneter Rotationsgeschwindigkeiten bei der Zentrifugation erreicht. Die Dialysemembran dient z.B. zur Zuführung oder Abtrennung niedermolekularer Komponenten bei der Expression von Rasterelementen.

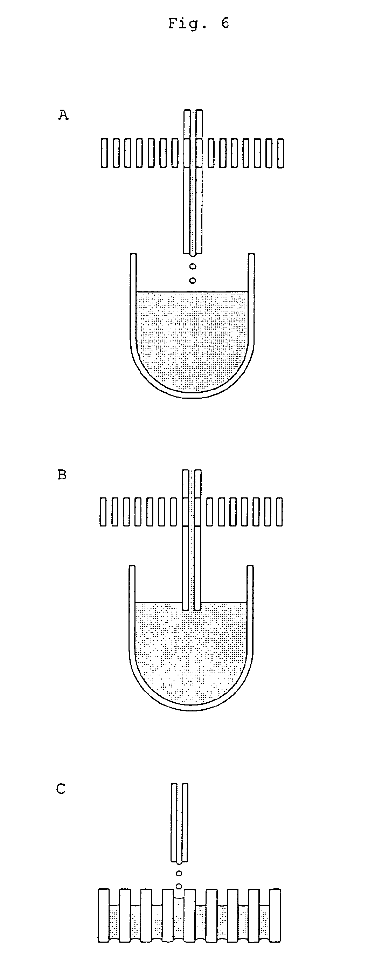

Die Figur 6 beschreibt ein Verfahren zur Prozessierung einzelner Rasterelemente. (A): Nukleinsäuren, Proteine oder Peptide werden aus einzelnen Rasterelementen durch Aufsetzen von Kapillaren und Durchleiten von Flüssigkeiten oder Gasen (Aerosolbildung) in ein Teströhrchen überführt. Bei konditional-immobilisierten Molekülen enthält das durchströmende Medium Komponenten zur Mobilisierung (z.B. freies Biotin bei Streptavidin-Biotin-immobilisierten Molekülen). Doppelsträngige Nukleinsäuren mit einem immobilisierten Strang sind ein Sonderfall der konditionalen Immobilisierung. Hier wird die Mobilisierung des nicht-immobilisierten Strangs vorzugsweise durch Durchleiten von heißen oder alkalischen Flüssigkeiten oder Gasen oder durch elektromagnetische Feldbeeinflussung erreicht. Die Abführung sehr kleiner Flüssigkeitsvolumina in das Teströhrchen kann durch die im Stand der Technik bekannten Verfahren zur Ablösung kleiner Flüssigkeitsmengen (z.B. Piezoröhrchen, piezoplanare Edge-oder Sideshooter, Piezolamellen- oder scherwandler, Bubble-Jet Edge- oder Sideshooter) erfolgen. Bei wiederholtem Prozessieren der Rasterelemente werden die aufgesetzten Kapillarteile vor jedem Verfahrensschritt gereinigt (z.B durch Erhitzen oder aggressive Chemikalien). Der Reinigungsschritt ist besonders wichtig bei der Prozessierung amplifizierbarer Nukleinsäuren. (B): Das Aufsetzen von Kapillaren kann zum Ansaugen von Flüssigkeiten oder Aerosolen eingesetzt werden. Dieser Verfahrensschritt dient auch zur individuellen Beladung von Rasterelmenten mit Primern (z.B. Einbringung von biotinylierten Primern in eine Rasteranordnung, die kovalent gebundenes Streptavidin enthält). (C): Weiterhin kann eine am Boden verschlossene oder mit Flüssigkeit gefüllte Rasteranordnung individuell durch die im Stand der Technik bekannten Verfahren zur Ablösung kleiner Flüssigkeitsmengen (s. oben) beladen werden. Der Beladungsvorgang wird vorzugsweise in gesättigter Atmosphäre durchgeführt. Das Verfahren kann beliebig oft wiederholt werden und eignet sich zum Einbringen zusätzlicher Nukleinsäuren, Proteine, Peptide und anderer Moleküle für Testung auf Bindung oder katalytische Aktivität. Der Verfahren ist weiterhin geeignet um verschiedene Kristallisationsbedingungen von Nukleinsäuren, Proteinen und Peptiden in einer Kapillaranordnung einzustellen. Erfolgreiche Kristallisationsbedingungen von Mikrokristallen können durch Standardverfahren (z.B. Lichtmikroskopie mit Polarisationsfiltern oder Lichtstreuung) identifiziert werden. Die Kristallisationsbedingungen können analog zu den konventionellen Methoden wie z.B. nach dem Batch-Verfahren, der Vapour-Diffusion-Methode oder den Dialyse-Verfahren eingestellt werden (vgl. Ducruix and Giege, in: Crystallization of Nucleic Acids and Proteins, IRL Press, 1992). Die Mikrokristalle können dann als Keime für Standard-Kristallisationen (z.B. nach der Hanging-Drop-, Sitting-Drop-, Sandwich-Drop- oder Dialyse-Methode) in der Röntgenstrukturanalyse verwendet werden.

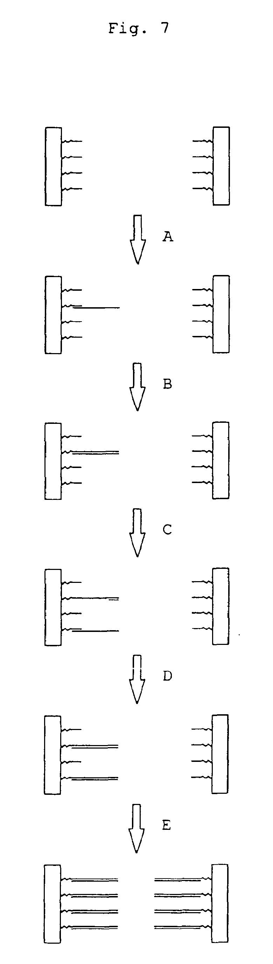

Die Figur 7 zeigt eine bevorzugte Verwendung des Verfahrens zur Klonierung von Nukleinsäuren mit immobilisierten Primern. Das Verfahren kann z.B. zur Klonierung genomischer Fragmente wie DNA, cDNA oder RNA verwendet werden. Weiterhin läßt sich das Verfahren bei synthetischen Nukleinsäure-Bibliotheken einsetzen, wie z.B. bei der Selektion von Aptameren oder Spiegelmeren, bei der Selektion von Proteinen durch Phage Display oder durch Ribosome Display (Adleman, Science 266, 1021-1024 (1994); Ogihara und Ray, Nature 403, 143-144 (2000). Ein erster Primer wird an die Kapillarinnenwände der Rasteranordnung gebunden (Entweder am 5'-Ende oder an beliebigen anderen Positionenen - lediglich die 3'-OH-Gruppe muß für den Schritt C frei sein). Hierfür werden die Rasterelemente mit einem oder wenigen Primern nach den in Figur 1 beschriebenen Verfahrenschritten simultan belegt (z.B. durch Bindung eines biotinylierten Primers an eine mit Streptavidin beschichtete Kapillaranordnung). Die Rasterelemente können individuell verschieden nach dem in Figur 5 beschriebenen Verfahrensschritt belegt werden (z.B. biotinylierte Primer mit individueller Sequenz). (A): Der Primer bindet aus einer Lösung von Nukleinsäuren komplementäre Fragmente. (B): Der Primer wird an seinem 3'-Ende durch Polymerasen verlängert. (C): Das komplementäre Fragment wird freigesetzt. Ein freier Primer lagert sich an das 3'-Ende der verlängerten Nukleinsäure an (der zweite Primer kann auch immobilisiert vorliegen, analog zur Bridge-Technologie - US 5,641,658). Das freigesetzte Fragment lagert sich an einen freien, gebundenen Primer an. (D): Die Primer werden an ihrem 3'-Ende durch Polymerasen verlängert. (E): Das Verfahren wird dann beliebig oft fortgesetzt, vorzugsweise durch zyklisiertes Erhitzen oder Denaturieren der Nukleinsäuren durch elektromagnetische Feldwirkung.

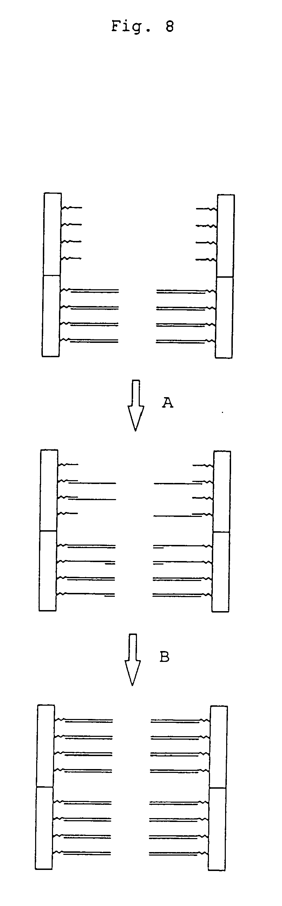

Die Figur 8 beschreibt eine bevorzugte Verwendung des Verfahrens zum vertikalen Kopieren einer Nukleinsäurebibliothek mit immobilisierten Primern. (A): Die Freisetzung von Einzelsträngen erfolgt, wie in Figur 6 beschrieben, durch Hitzedenaturierung oder elektromagnetische Wechselwirkung. Die freigesetzten Einzelstränge können sich an immobilisierte Primer in einer zweiten (oder mehreren), an der Vorlage ausgerichteten Rasteranordnung(en) anlagern. An die immobilisierten Einzelstränge in der Vorlage-Rasteranordnung können zugesetzte Primer binden. (B): Die Primer werden an ihrem 3'-Ende durch Polymerasen verlängert. Das Verfahren wird dann beliebig oft fortgesetzt. Der Transfer von freigesetzten Einzelsträngen aus der Vorlage in die Kopierasteranordnungen kann auch gerichtet stattfinden, z.B. bei Durchströmung der Rasteranordnungen mit Flüssigkeiten oder Gasen oder bei Anlegen eines elektrischen Feldes. Weiterhin kann der Transfer von der Amplifikation entkoppelt werden. Die Nukleinsäuren in den Kopie-Rasteranordnungen können dann individuell amplifiziert werden. Dieser Entkopplungsschritt kann z.B. zum Einbau von verschieden modifizierten Nukleotiden in den jeweiligen Kopie-Rasteranordnungen genutzt werden. Eine nach Verfahrenschritt (B) durch Denaturierung zur einzelsträngigen Bibliothek konvertierte Rasteranordnung kann für Hybridisierungen mit komplementären Nukleinsäuren eingesetzt werden, beispielsweise beim Chromosome Walking oder bei der Zuordnung und Quantifizierung von DNAs, cDNAs oder RNAs. Die einzelsträngige oder doppelsträngige Rasteranordnung kann zum Nachweis der sequenzspezifischen Wechselwirkung mit Molekülen (z.B. genregulatorische Proteine, Aktivator-Proteine, Repressor-Protein2 oder niedermolekulare Wirkstoffe) eingesetzt werden. Die DNA-Moleküle können zum Test auf Wechselwirkung auch modifiziert werden (z.B. durch Methylierung oder Bindung von Strukturproteinen wie Histonen). Weiterhin können einzelsträngige oder doppelsträngige Rasteranordnungen, die aus synthetischen Nukleinsäure-Bibliotheken hervorgegangen sind, zur Identifizierung von neuen Aptameren, Spiegelmeren und Ribozymen dienen. Die Beladung der Kapillarinnenwände mit Primern bestimmt bei dieser Verfahrensanordnung unter optimalen Polymerisationsbedingungen die endgültige Beladung der kopierten Nukleinsäurebibliothek. Eine Modulation der Beladung ist wichtig, um z.B. Hybridisierungs- oder Bindungsexperimente von Nukleinsäuren, Proteinen oder Peptiden untereinander bzw. miteinander oder mit anderen Molekülen zu optimieren. Durch iteratives Verringern der Primerkonzentrationen und damit der Nukleinsäure- oder Proteinkonzentration werden unspezifische Bindungssignale unterdrückt. Weiterhin ist z.B. eine Modulation der Beladung bei dem Design von Nukleinsäuren oder Proteinen mit verbesserten katalytischen Eigenschaften notwendig. Bei dem Kopierverfahren können die in der jeweiligen Vorlage-Rasteranordnung freien Nukleinsäurestränge immobilisiert werden. Durch Zugabe beider Primer in freier Form enstehen nicht-immobilisierte Kopien des in der Vorlage-Rasteranordnung immobilisierten Nukleinsäurestrangs. Diese freien Kopien können als Matrize für die Synthese des immobilisierten Gegenstrangs genutzt werden. Dieser Verfahrensschritt wird eingesetzt, um komplementäre Kopie-Rastereranordnungen herzustellen. Weiterhin können in der Kopie-Rastereranordnung auch beide Stränge immobilisiert werden. Bei hoher Beladungsdichte der Primer entstehen Brückenmoleküle analog zu US 5,641,65. In analoger Vorgehensweise (keine Figur) können auch konditional immobilisierte Proteine übertragen werden. So können aus einer Vorlage-Rasteranordnung über z.B. His-Tag gebundene, biotinylierte Proteine durch Zugabe von Nickel-Ionen mobilisiert werden. Die jetzt beweglichen Proteine können auf eine zweite, mit z.B. Streptavidin-beschichtete Rastereranordnung übertragen werden, wo sie jetzt durch Biotin-Streptavidin-Wechselwirkung immobilisiert werden.

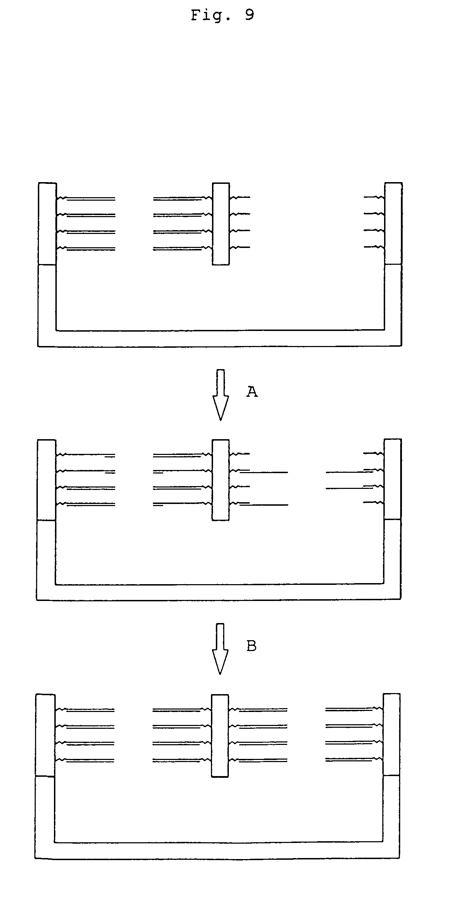

Die Figur 9 zeigt eine bevorzugte Verwendung des Verfahrens zur Herstellung horizontaler Kopien. Mit dieser Vorgehensweise lassen sich Kopien von Rasterlementen in derselben-Rasteranordnung erstellen.

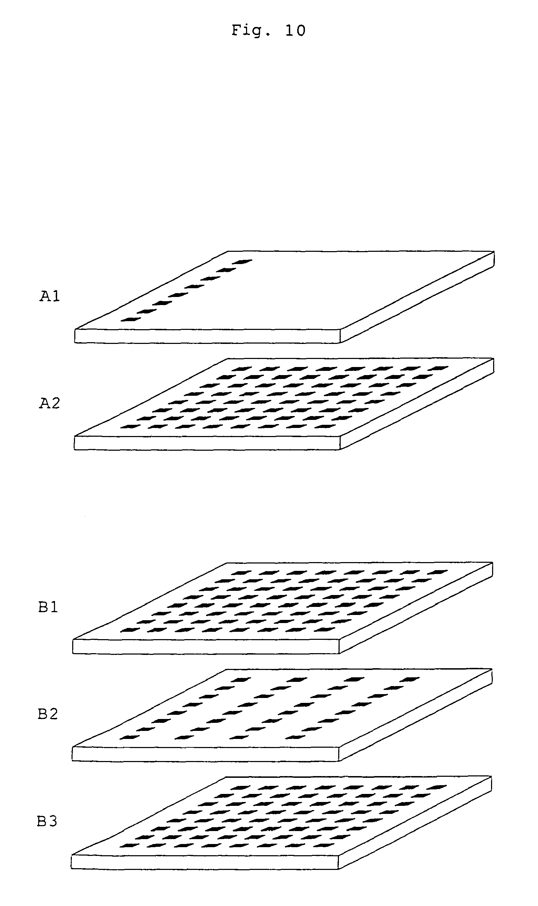

Die Figur 10 zeigt eine Verwendung des Verfahrens, bei dem Teilbereiche der Rasteranordnung nicht prozessiert werden. Lediglich ein Teil der Rasterelemente der beladenen Rasteranordnung wird mit einem Teil der Rasterelemente der leeren Rasteranordnung durch Zwischenschaltung einer Rastermaske zwischen die beiden Rasteranordnungen verbunden, wobei die Anzahl von Rasterdurchlaßöffnungen der Rastermaske kleiner als die Anzahl der Rasterelemente der beladenen Rasteranordnung ist. (A): Durch Ansteuern oder Abdecken von Rasterbereichen durch beliebig geformte Deckmasken (z.B. A1) können Rasteranordnungen (A2) hergestellt werden, die verschiedene Nukleinsäuren, Proteine oder Peptide in nur Teilbereichen (Rasterfelder) enthalten. In dem gezeigten Beispiel werden nur die Rasterelemente einer Reihe belegt. In analoger Vorgehensweise können weitere Rasterelemente belegt werden. Diese Verfahrensweise kann z.B. für die quantitative PCR oder LCR genutzt werden. Die Immobilisierung von verschiedenen Primern in Rasterfeldern erlaubt in Verbindung mit dem in Figur 7 beschriebenen Verfahren die simultane Klonierung von mehreren mRNAs oder cDNAs in einer Rasteranordnung. Nach z.B. Färbung mit Ethidiumbromid können die Zahl der Klone in den verschiedenen Rasterfeldern simultan durch die im Stand der Technik bekannten CCD-Verfahren ermittelt und durch Rechnerprogramme miteinander verglichen werden. Bei der Verwendung von einem oder mehreren Referenzfeldern analog zur kompetitiven PCR (vgl. Halford, Nature Biotechnology 17, 835 (1999)) kann der Verdünnungsfehler bei der Quantifizierung der Genexpression eliminiert werden. Weiterhin kann ein Rasterfeld nach diesem Verfahrensschritt auch mit mehr als einem Primer belegt werden. Dadurch läßt sich eine höhere Beladung der Rasteranordnung erzielen. Diese Vorgehensweise setzt allerdings voraus, daß die verschiedenen Klone eines Rasterfeldes durch die im Stand der Technik bekannten Verfahren, wie z.B. Molecular Beacons oder TaqManProbes, unterschieden werden. (B): Deckmasken (B1) können auch für das erfindungsgemäße Kopierverfahren nach Figur 2 bzw. Figur 8 eingesetzt werden, so daß nur Teile einer Vorlage-Rasteranordnung übertragen werden. Im gezeigten Beispiel der Deckmaske (B2) werden nur die Rasterelemente der ersten, dritten, fünften und siebenten Spalte aus der Vorlagerasteranordnung (B3) auf die Kopie-Rasteranordnung (B1) übertragen. Die nicht besetzten Rasterelemente der Kopie können in einem zweiten oder weiteren Kopiervorgängen belegt werden. So kommt z.B. in einem parallelen Prozeß durch seitliches Versetzen der Vorlage um eine Spalte nach rechts eine zweite Kopie jedes Rasterelements in direkte Nachbarschaft der ersten Kopie (oder nach dem in der Legende von Figur 8 beschriebenen Verfahren der jeweilige Gegenstrang). Dieser Verfahrenschritt ist wichtig, um z.B. Doppel- oder Mehrfachbestimmungen auf einer Matrix durchführen zu können. (z.B. bei der Quantitativen PCR und LCR oder bei Expressionsstudien).

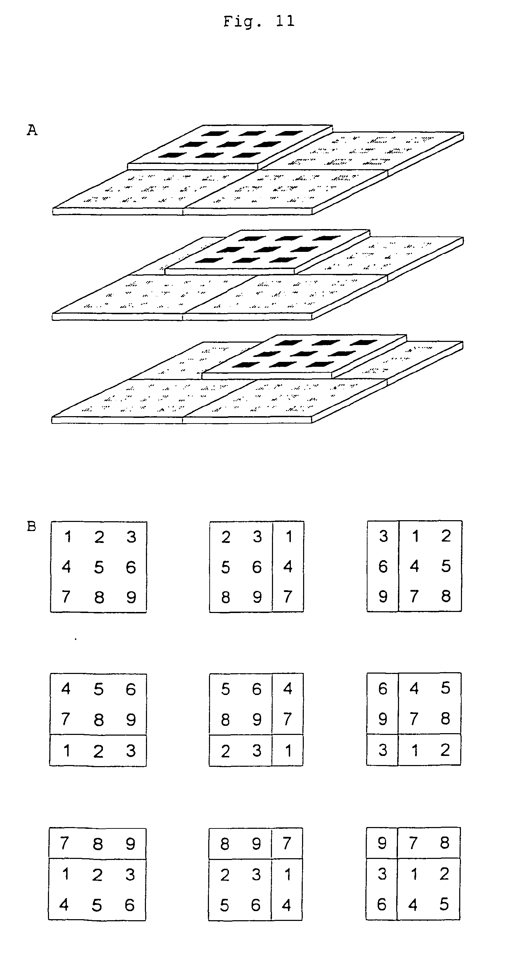

Die Figur 11 zeigt eine Verwendung des Kopierverfahrens zur Permutation der Rasterelemente. Zunächst wird eine Mehrzahl von identischen, mit Nukleinsäuren beladenen Rasteranordnungen mit gleichem lateralen Rastermaß der Rasterelemente hergestellt, wobei diese Rasteranordnungen nebeneinander angeordnet werden, vorzugsweise mit der Maßgabe, daß das Rastermaß der Rasteranordnungen nach der nebeneinander Anordnung über Verbindungsbereiche nebeneinanderliegender Rasteranordnungen kontinuierlich fortlaufend ist. Eines, mehrere oder alle Rasterelemente einer leere Rasteranordnung mit vorzugsweise gleichem Rastermaß werden mit korrespondierenden Rasterelementen der nebeneinander angeordneten, mit Nukleinsäuren beladenen Rasteranordnungen verbunden. Im einzelnen kann wie folgt verfahren werden. (A): Von der Vorlage-Rasteranordnung werden zunächst identische Kopien hergestellt. Auf vier nebeneinanderliegenden Kopien können durch versetztes Anlegen der Kopie-Rasteranordnungen beliebige Permutationen der Vorlage-Rasteranordnung erreicht werden. (B): Zur Verdeutlichung sind in die möglichen Kopien für eine Matrix mit neun Elementen dargestellt. Durch Inkontaktbringen einer Rasteranordnung mit sämtlichen möglichen Permutationen derselben oder einer anderen Rasteranordnung lassen sich die Wechselwirkungen von Nukleinsäuren, Proteinen oder Peptiden auf schnellem Weg umfassend ermitteln. So kann z.B. die Rasteranordnung einer humanen cDCdA-Bank nach diesem Verfahrensschritt permutiert werden. Die unter z.B. radioktiver oder fluoreszenter Markierung zum Doppelstrang ergänzte Vorlage-Rasteranordnung kann mit den permutierten Kopien in einzelsträngiger Form in Kontakt gebracht werden (oder umgekehrt). Weiterhin können von den permutierten Kopien in doppelsträngiger Form die Proteinkopien nach dem in Figur 3 beschriebenen Verfahrensschritt hergestellt werden. Die Vorlage-Rasteranordnung wird unter Einbau radioaktiver Aminosäuren exprimiert. Nach Inkontaktbringen einer Rasteranordnung mit immobilisierten Liganden (Nukleinsäuren, Proteinen, Peptiden oder beliebigen anderen Molekülen) mit einem vollständigen Satz permutierter Kopien von Nukleinsäuren, Proteinen oder Peptiden kann somit die Wechselwirkung aller Rasterelemente simultan ermittelt werden.

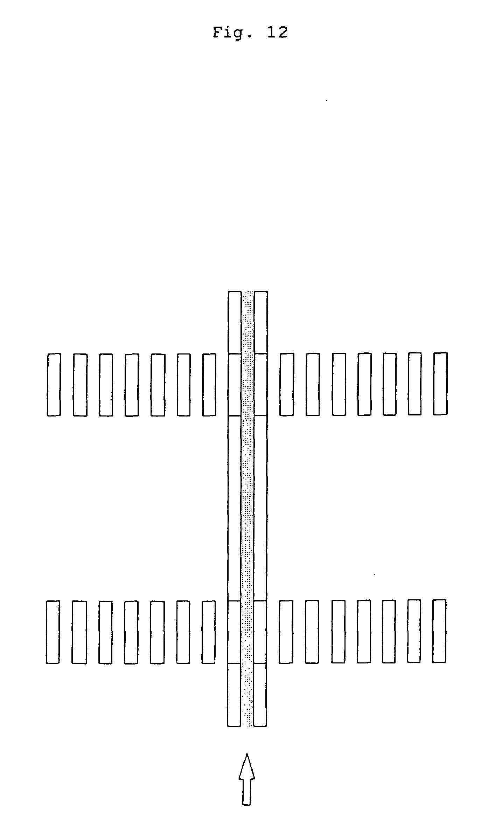

Die Figur 12 zeigt ein Verfahren zum Ordnen von Rasterelementen. Es wird eine Einzelverbindung, beispielsweise über eine Kapillare, zwischen einem Rasterelement der beladenen Rasteranordnung und einem Rasterelement der leeren Rasteranordnung hergestellt, wobei durch subsequentes definiertes laterales Verschieben der Einzelverbindung und/oder eines und/oder beider Rasteranordnungen die Rasterelemente der leeren Rasteranordnung nacheinander mit Nukleinsäuren aus den Rasterelementen der beladenen Rasteranordnung beladen werden. Die Nukleinsäuren, Proteine oder Peptide in der Vorlage-Rasteranordnung werden dabei konditional immobilisiert. Einzelne Rasterelemente der Vorlage-Rasteranordnung werden durch Kapillarzuführung einer Flüssigkeit oder Gases durchströmt, wobei die konditionale Immobilisierung aufgehoben wird. Die Moleküle eines Vorlage-Rasterelements werden auf das Kopie-Rasterelement übertragen, wo sie erneut immobilisiert werden. So können z.B. Einzelstränge, die an immobilisierte Gegenstränge hybridisiert sind, bei Durchleiten einer heißen Flüssigkeit mobilisiert werden. Die Flüssigkeit wird bei Durchströmen einer zwischen den Rasteranordnungen liegenden Kapillare abgekühlt. Bei Erreichen der Kopie-Rasteranordnung können die Einzelstränge an komplementäre Primer binden. Das Ordnen der Rasterelemente wird durch seitliches Versetzen von Vorlage-Rasteranordnung und/oder Kopie-Rasteranordnung erreicht.

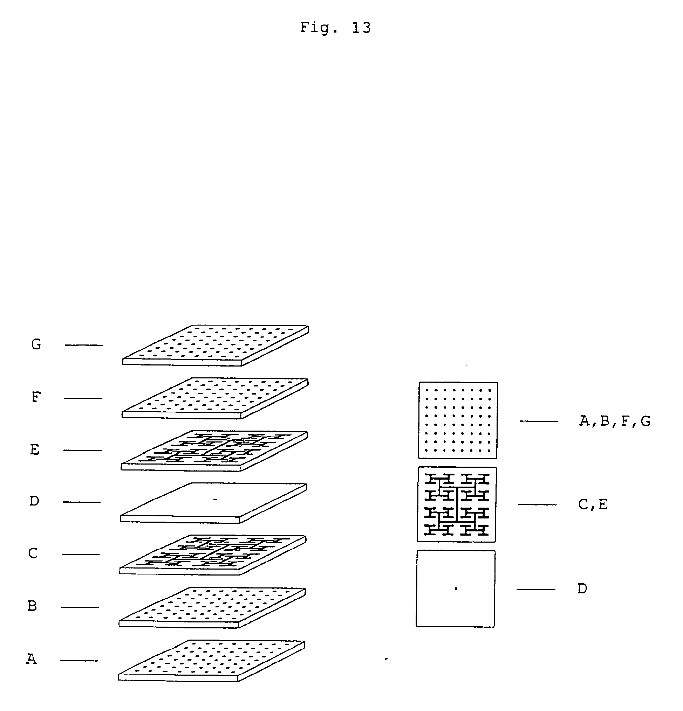

Figur 13 beschreibt ein Verfahren zum Ordnen von Rasterelementen, wie in Figur 12 beschrieben, aber ohne seitliches Versetzen der Vorlage-Rasteranordnung (A) oder Kopie-Rasteranordnung (G). Zwischen die beladene Rasteranordnung und die leere Rasteranordnung werden folgende Bauelemente zwischengeschaltet: optional, eine Deckmaske (B), eine Verteilermaske (C), vorzugsweise mit äquidistanter Verteilerwegführung bezüglich eines Abnahmepunktes und in einer Ebene parallel zur Rasterfläche, eine Punktmaske (D) mit einer einzelnen Durchlaßöffnung, eine Verteilermaske (E), vorzugsweise mit äquidistanter Verteilerwegführung bezüglich eines Abnahmepunktes und in einer Ebene parallel zur Rasterfläche, und optional, eine Deckmaske (F), wobei die Abnahmepunkte der Verteilermasken mit der Durchlaßöffnung der Punktmaske verbunden sind, wobei eine Übertragung der Nukleinsäuren eines Rasterelements der beladenen Rasteranordnung auf ein Rasterelement der leeren Rasteranordnung dadurch erfolgt, daß das ausgewählte Rasterelement der beladenen Rasteranordnung mit einem Fluidstrom beaufschlagt wird und daß gleichzeitig das ausgewählte Rasterelement der leeren Rasteranordnung für einen Fluidstrom auf durchlässig geschaltet wird, und wobei ggf. die Schritte der Fluidstrombeaufschlagung und der Durchlässigschaltung für gewünschte verschiedene Rasterelemente der beiden Rasteranordnungen wiederholt werden. Die Deckmasken (B) und (F) verhindern eine Kontamination der Oberflächen von (A) und (G). Die als Beispiel gezeigte Anordnung der Führungsmasken (C), (D) und (E) sichert eine äquidistante Verbindung aller Rasterelemente der Vorlage (A) und Kopie (G). Die Bewegung von elektrisch geladenen Nukleinsäuren, Proteinen oder Peptiden in der Anordnung wird bevorzugt durch Mikroelektroden-Einzelansteuerung der Rasterelemente durchgeführt.

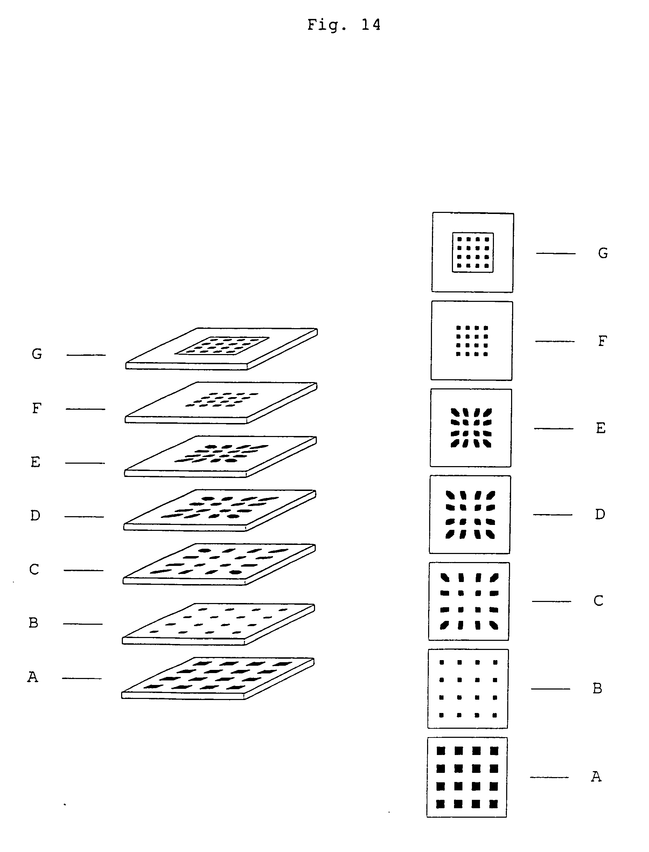

Die Figur 14 zeigt eine Verwendung von Masken beim Übertragungs- oder Kopiervorgang, bei der eine beliebige Verkleinerung oder Vergrößerung der Vorlage-Rasteranordnung erreicht wird. Dabei weisen die mit Nukleinsäuren beladene Rasteranordnung und die leere Rasteranordnung ein unterschiedliches Rastermaß auf. Die Verbindung der Rasterelemente erfolgt unter Zwischenschaltung zumindest einer Verkleinerungsmaske oder Vergrößerungsmaske. Die als Ausführungsbeispiel gezeigte Vorrichtung hat zur Rasterfläche senkrechte Bohrungen. Eine Verkleinerung oder Vergrößerung kann auch durch schräge Wegführung der Rasterelemente erreicht werden.

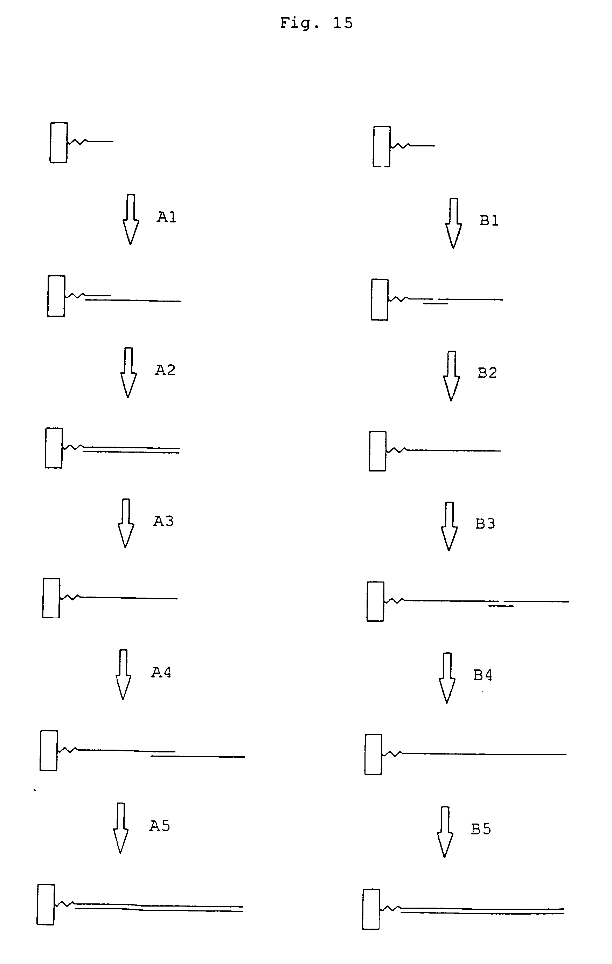

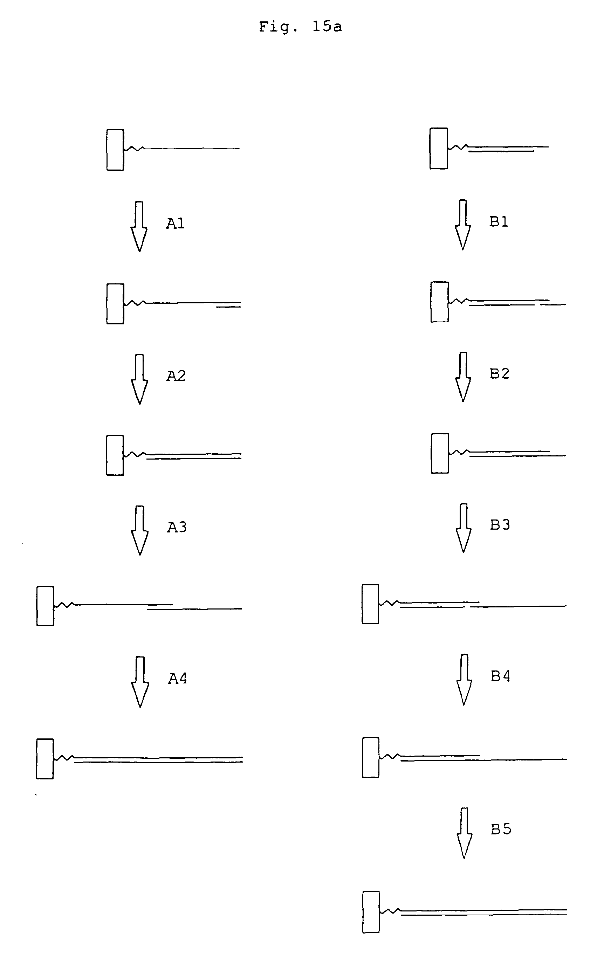

Die Figur 15 zeigt Verwendungen des Verfahrens zur Verlängerung von Nukleinsäuren in einem Rasterelement. Die Nukleinsäuren können durch Einsatz komplementärer Fragmente in gerichteter Form durch z.B. (A) Extension von Primern oder (B) Ligation verlängert werden. (A1): Der immobilisierte Primer bindet aus einer Lösung von Nukleinsäuren komplementäre Fragmente. (A2): Der Primer wird an seinem 3'-Ende durch Polymerasen verlängert. (A3): Das komplementäre Fragment wird freigesetzt. (A4): Ein neues Fragment lagert sich an das 3'-Ende der verlängerten Nukleinsäure an. (A5): Die Primer werden an ihrem 3'-Ende durch Polymerasen verlängert. Das Verfahren wird dann beliebig oft fortgesetzt. Vorzugsweise werden die Nukleinsäuren durch zyklisiertes Erhitzen oder durch elektromagnetische Feldwirkung denaturiert. (B1): Das immobilisierte Fragment bindet aus einer Lösung von Nukleinsäuren komplementäre Fragmente. Das immobilisierte Fragment wird durch Ligation verlängert. (B2): Das komplementäre Fragment wird freigesetzt. (B3): Ein neues komplementäres Fragment lagert sich an das 3'-Ende der verlängerten Nukleinsäure an. (B4): Das komplementäre Fragment wird freigesetzt. (B5): Die Verfahrenschritte B3 und B4 werden dann beliebig oft fortgesetzt. Nach Anlagerung eines terminalen Primers und Extension durch Polymerasen kann das einzelsträngige Produkt zum Doppelstrang ergänzt werden. Weiterhin können die im Stand der Technik bekannten Verfahren zur Prozessierung von Nukleinsäuren, wie z.B. Spaltung oder Abbau mit Nukleasen, Ligation von Fragmenten mit glatten oder kohäsiven Enden beliebig mit dem erfindungsgemäßen Verfahren kombiniert werden. Die bei den Hybridisierungschritten verwendeten Nukleinsäuren sind in der Regel vollständig komplementär. Die Nukleinsäuren können allerdings Bereiche mit Fehlpaarungen zur Erzeugung von Regionalen- oder Punktmutationen enthalten. Diese Verfahrenschritte zur Verlängerung von Nukleinsäuren können beliebig mit dem in Figur 8 oder Figur 9 beschriebenen Verfahren zum vertikalen oder horizontalen Kopieren kombiniert und zum Aufbau komplexer Genome genutzt werden. Das Verfahren ermöglicht dabei die parallele Verlängerung sämtlicher Rasterelemente einer Rasteranordnung. So kann z.B. eine Rasteranordnung von Genen durch das Anhängen einer Promotorsequenz für die Expression funktionalisiert werden. Zur Verlängerung der Nukleinsäuren können zudem Rasteranordnungen verwendet werden, die verschiedene Fragmente in den Rasterelementen enthalten. Die Sequenzen der Fragmente können dabei bekannt oder unbekannt (random) sein. Das Verfahren erlaubt damit das Herstellen von sortierten Nukleinsäure oder Protein/Peptid-Bibliotheken, die zur schnellen Identifizierung funktioneller Varianten (z.B. Ribozyme, Bindungsproteine oder Enzyme) dienen. So kann z.B. eine Rasteranordnung die 5'-terminale Sequenz eines single-chain-Antikörper-Gens bis zur variablen Region enthalten. Zur Verlängerung wird eine Rasteranordnung mit sortierten Fragmenten, die die variable Region enthalten, verwendet. Im dritten Schritt werden die Rasterelemente mit der 3'-terminalen Sequenz des Antikörper-Gens verlängert. Nach Expression der Antikörper können funktionelle Varianten durch z.B. Bindung an ein markiertes Antigen identifiziert werden.

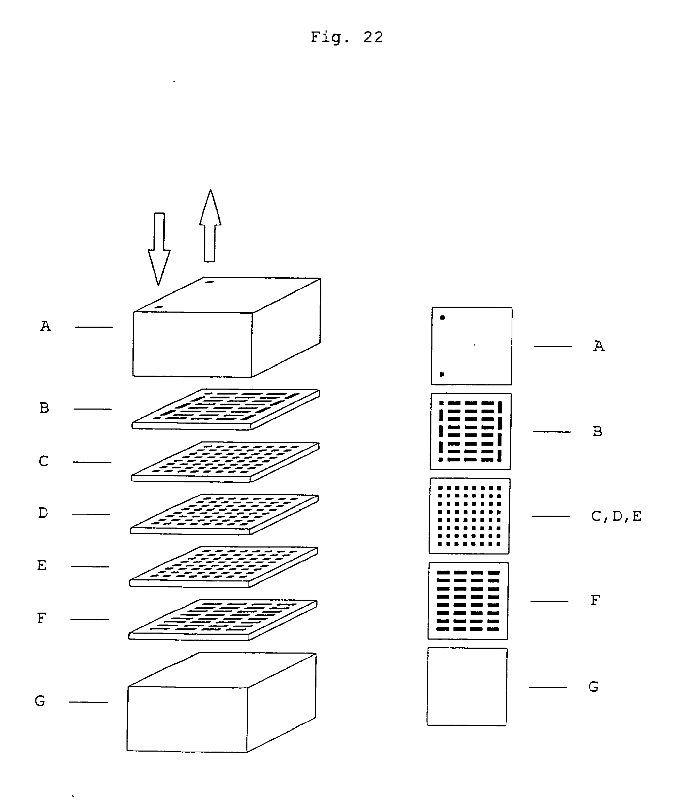

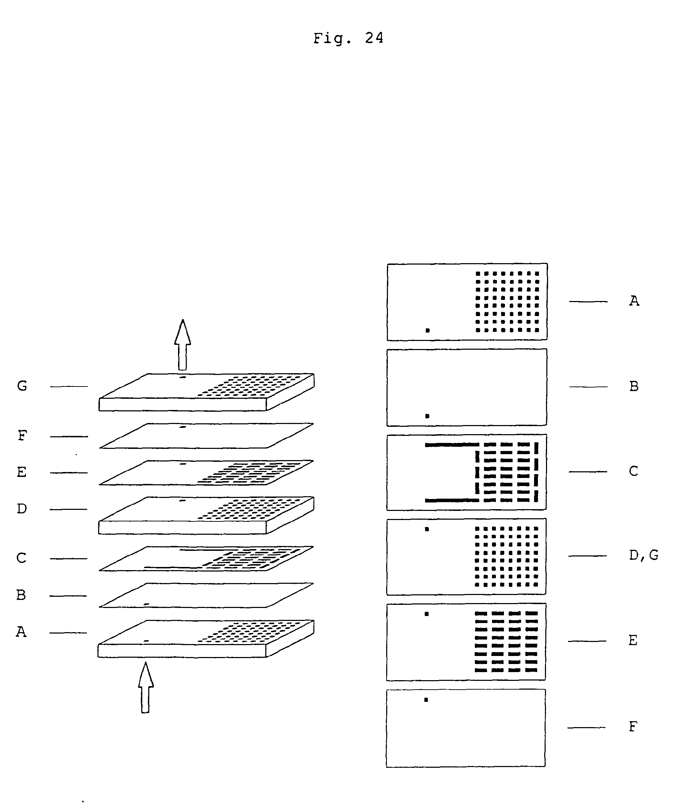

Die Figur 15a zeigt Verwendungen des Verfahrens zur Verlängerung von Nukleinsäuren in verschiedenen Rasterelementen. Durch Überführung einer Nukleinsäure von einem Vorlage-Rasterelement in ein Verlängerungs-Rasterelement kann auch eine nicht-immobilisierte Nukleinsäure sequentiell verlängert werden. Die Nukleinsäuren können durch z.B. (A) Extension von Primern oder (B) Ligation verlängert werden. (A1): Das immobilisierte Fragment bindet aus einer Lösung von Nukleinsäuren komplementäre Primer. (A2): Der Primer wird an seinem 3'-Ende durch Polymerasen verlängert. (A3): Der verlängerte Primer wird freigesetzt und durch vertikalen oder horizontalen Transfer in ein neues Rasterelement überführt. Das neue Rasterelement enthält eine zum 3'-Ende des verlängerten Primers komplementäre Sequenz. (A4): Der verlängerte Primer wird an seinem 3'-Ende erneut verlängert. Das Verfahren wird dann beliebig oft fortgesetzt. Vorzugsweise werden die Nukleinsäuren durch Erhitzen oder durch elektromagnetische Feldwirkung bzw. Wechselfeldwirkung denaturiert. (B1): Das immobilisierte Fragment bindet aus einer Lösung von Nukleinsäuren komplementäre Fragmente. (B2): Die komplementären Fragmente werden durch Ligation verknüpft. (B3): Das ligierte Fragment wird freigesetzt und durch vertikalen oder horizontalen Transfer in ein neues Rasterelement überführt. Das neue Rasterelement enthält eine zum 3'-oder 5'-Ende des ligierten Fragments komplementäre Sequenz. (B4): Das ligierte Fragment wird wird mit einem benachbarten Fragment ligiert. (B5): Die Verfahrenschritte B3 und B4 werden dann beliebig oft fortgesetzt. Durch Extension mit Polymerasen kann das Produkt zum vollständigen Doppelstrang ergänzt werden. In einer bevorzugten Ausführungsform werden die Nukleinsäuren nach diesen Verfahrensschritten mit der in Figur 22 oder Figur 24 beschriebenen Vorrichtung verlängert.

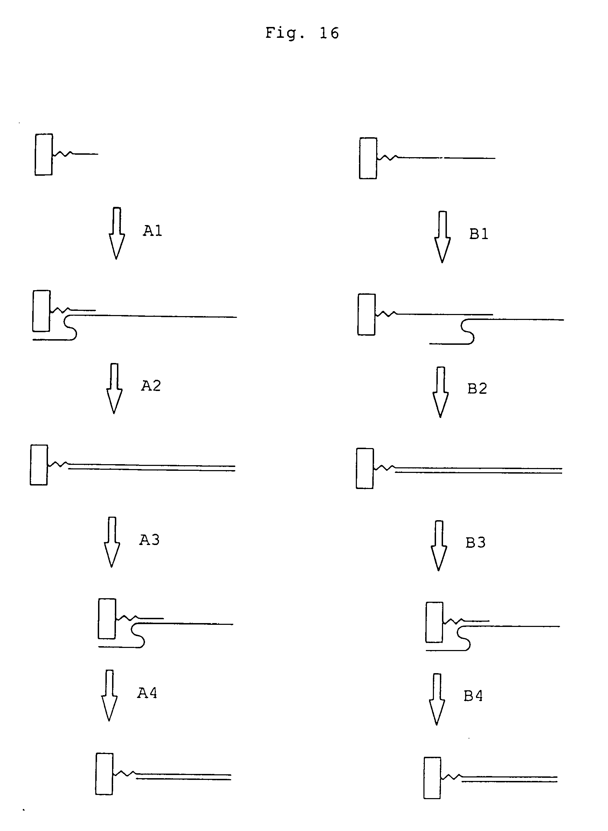

Die Figur 16 zeigt Verwendungen des Verfahrens zur Verkürzung und Rekombination von Nukleinsäuren. Die Nukleinsäuren können nach diesen Verfahrensschritten (A) verkürzt werden oder (B) verkürzt und rekombiniert werden. (A1): Der immobilisierte Primer bindet innerhalb eines komplementären Fragments. (A2): Der Primer wird an seinem 3'-Ende durch Polymerasen verlängert. Das komplementäre Fragment wird freigesetzt. Ein zum 3'-Ende des verlängerten Primers komplementärer Primer wird angelagert und an seinem 3'-Ende durch Polymerasen verlängert. (A3): Der verlängerte Primer wird freigesetzt und durch vertikalen oder horizontalen Transfer in ein neues Rasterelement überführt. Das neue Rasterelement enthält einen Primer, der innerhalb des verlängerten Primers bindet. (A4): Der Primer wird an seinem 3'-Ende durch Polymerasen verlängert. Die Verfahrenschritte A3 und A4 werden dann beliebig oft fortgesetzt. In einer weiteren Ausführungsform sind die in Verfahrensschritt A1 und A3 hybridisierenden Fragmente von identischer Länge und Sequenz. Dadurch kann z.B. in einer Vorrichtung gemäß Figur 22 oder Figur 24 in nur einer Rasteranordnung ein Satz aufeinanderfolgender Deletionsmutanten erzeugt werden. (B1): Ein immobilisiertes Fragment bindet mit einem Sequenzabschnitt am 3'-Ende innerhalb eines komplementären Fragments. (B2): Das immobilisierte Fragment wird an seinem 3'-Ende durch Polymerasen verlängert. Das komplementäre Fragment wird freigesetzt. Ein zum 3'-Ende des verlängerten Primers komplementärer Primer wird angelagert und an seinem 3'-Ende durch Polymerasen verlängert. (B3): Der verlängerte Primer wird freigesetzt und durch vertikalen oder horizontalen Transfer in ein neues Rasterelement überführt. Das neue Rasterelement enthält ein immobilisiertes Fragment, das innerhalb des verlängerten Primers bindet. Das immobilisierte Fragment wird an seinem 3'-Ende durch Polymerasen verlängert. Das komplementäre Fragment wird freigesetzt. Ein zum 3'-Ende des verlängerten Primers komplementärer Primer wird angelagert und an seinem 3'-Ende durch Polymerasen verlängert. (B4): Der Primer wird an seinem 3'-Ende durch Polymerasen verlängert. Die Verfahrenschritte A3 und A4 werden dann beliebig oft fortgesetzt. Die Verfahrensschritte zur Verkürzung und Verlängerung können beliebig miteinander kombiniert werden. Eine weitere Ausführungsform ist die Rekombination von Genen, die für funktionelle Domänen von Proteinen kodieren analog zum Exon-Shuffling.

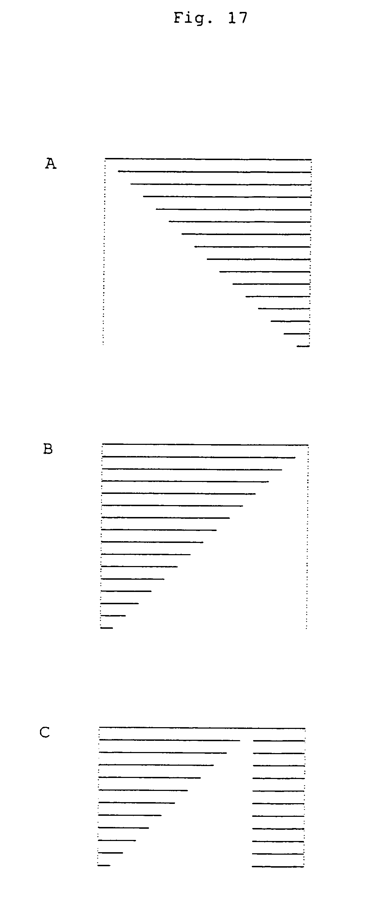

Die Figur 17 zeigt einen Satz von N-terminalen (A), C-terminalen (B) oder interner (C) Deletionsmutanten zur funktionellen Genomanalyse, die sich mit den in Figur 15, 15a und 16 beschriebenen Verfahren herstellen lassen. So kann z.B. eine Rasteranordnung mit Primern, die aufeinanderfolgend die Sequenz eines Gens in um drei Nukleotide versetzter Form enthalten, durch horizontales Kopieren (s. Figur 9 und Figur 15A) zur Herstellung einer Rasteranordnung dienen, die einen vollständigen Satz N-oder C-terminaler Deletionen enthält. Diese Deletionsmutanten können damit funktionell und parallel getestet werden. Einzelne N- oder C-terminale Deletionen können dann nach Figur 17 zum Herstellen interner Deletionen genutzt werden.

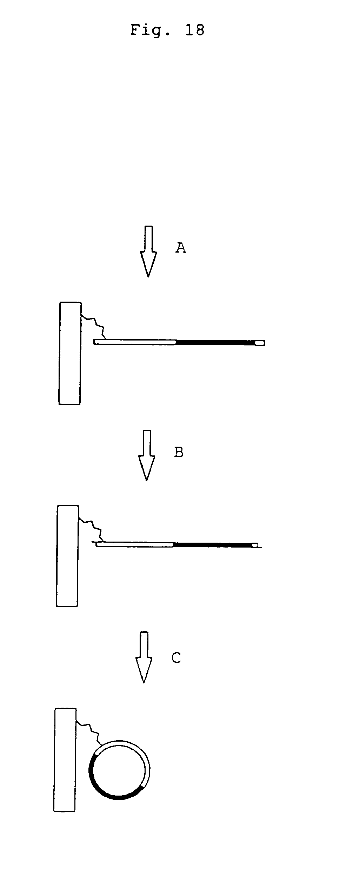

Die Figur 18 beschreibt ein Verfahren zur in situ-Rekombination von genetischen Elementen. Das erfindungsgemäße Verfahren kann beliebig mit dem im Stand der Technik bekannten Methoden zur in vitro-Rekombination und Transfektion kombiniert werden. Das Anhängen eines Vektors bzw mehrerer Vektoren (z.B. Vektoren zur verschiedenen gewebsspezifischen Expression) ist möglich.

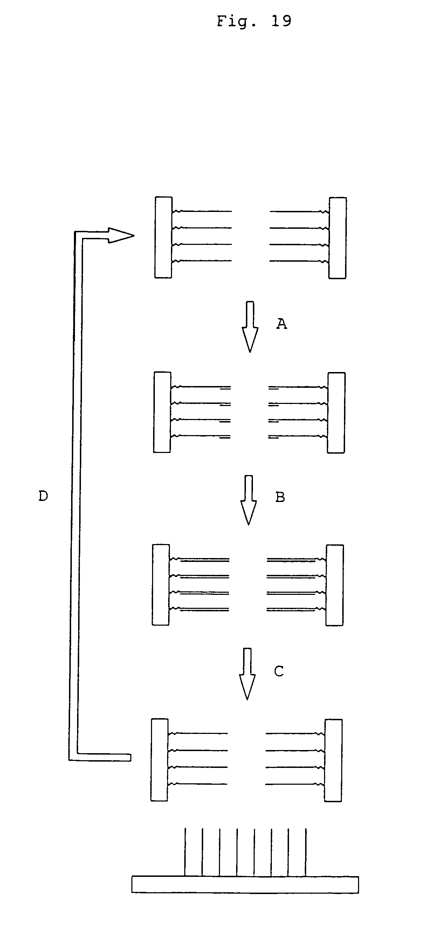

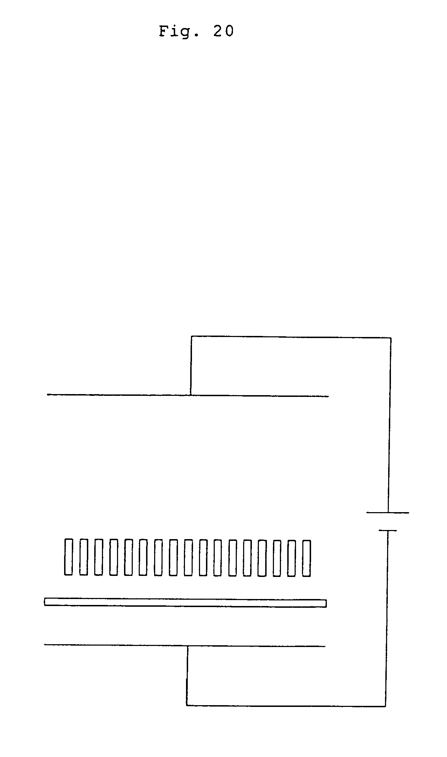

Die Figuren 19 und 20 zeigen eine Verwendung des Verfahrens zur Übertragung einer Nukleinsäurebibliothek auf eine Oberfläche (Herstellen von Genchips). Es ermöglicht die Herstellung eines Nukleinsäurebibliothekchips mit einem flächigen porösen oder nicht porösen Träger, wobei die Rasterfläche der erfindungsgemäßen Nukleinsäurebibliothek mit dem Träger in direkten oder indirekten flächigen Kontakt gebracht wird und wobei mobilisierte Nukleinsäuren simultan aus den Rasterelementen auf den Träger übertragen werden unter Aufrechterhaltung der zweidimensional ortsaufgelösten Ordnung der Nukleinsäurebibliothek. Die Übertragung kann mittels einer Methode, ausgewählt aus der Gruppe bestehend aus "Migration in einem elektrischen Feld, Migration in einem magnetischen Feld, Zentrifugation, Druckdifferenz, und Kombinationen dieser Methoden" durchgeführt werden. Der Verfahrenschritt D kann beliebig oft wiederholt werden, um eine maximale Beladung des Trägers zu erreichen.

Die Figur 20 zeigt eine Ausführungsform des in Figur 19 beschriebenen Verfahrens unter Einsatz eines elektrischen Feldes. Diese Ausführungsform des Verfahrens kann auch für konditional immobilisierte Proteine oder Peptide verwendet werden.

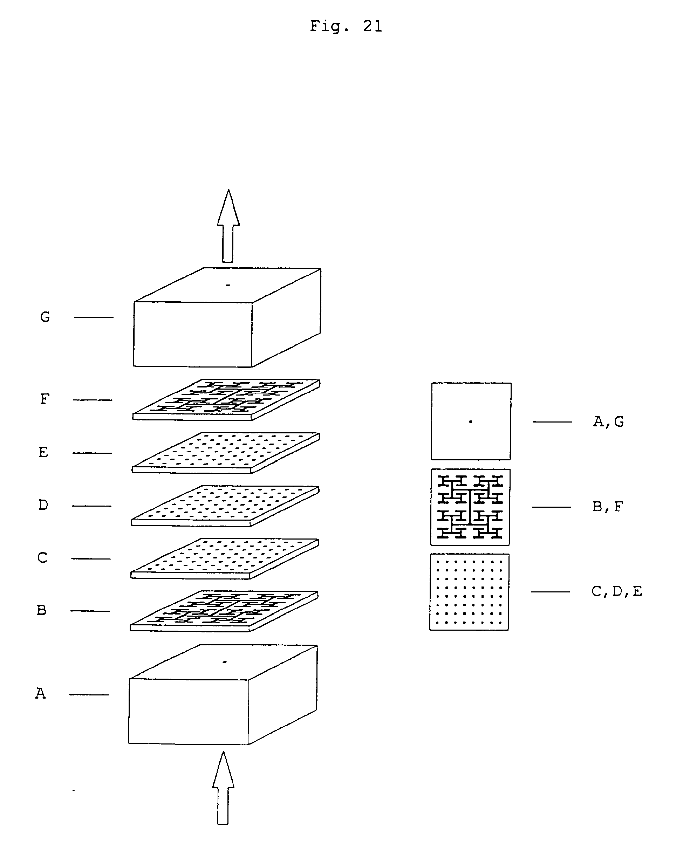

Die Figur 21 beschreibt eine Vorrichtung zum parallelen Durchströmen einer (D) oder beliebig vieler Rasteranordnungen mit Verwendung einer erfindungsgemäßen Nukleinsäurebibliothek oder Protein- oder Peptidbibliothek in einem Verfahren zum Prozessieren, insbesondere zum Klonieren oder Kopieren von Nukleinsäuren oder zur Untersuchung von Wechselwirkungen zwischen Molekülen, wobei die Rasterelemente der Nukleinsäurebibliothek oder Protein- oder Peptidbibliothek parallel mit einer Lösung enthaltend Reagenzien und/oder prospektiv wechselwirkende Moleküle durchströmt werden, wobei folgende Anordnung getroffen ist: ein Druckblock (A) in Ausbildung einer Punktmaske mit einer einzelnen Durchlaßöffnung, eine Verteilermaske (B), vorzugsweise mit äquidistanter Verteilerwegführung bezüglich eines Abnahmepunktes und in einer Ebene parallel zur Rasterfläche, optional eine Deckmaske (C), die Nukleinsäurebibliothek (D) oder die Protein- oder Peptidbibliothek mit beidseitig offenen Rasterelementen, optional eine Deckmaske (E), eine Verteilermaske (F), vorzugsweise mit äquidistanter Verteilerwegführung bezüglich eines Abnahmepunktes und in einer Ebene parallel zur Rasterfläche, ein Druckblock (G) in Ausbildung einer Punktmaske mit einer einzelnen Durchlaßöffnung, wobei die Durchlaßöffnungen und die Abnahmepunkte vorzugsweise miteinander fluchten auf einer Linie orthogonal zur Rasterfläche und wobei die Durchlaßöffnung des Druckblocks (A) mit einem Volumenstrom der Lösung beaufschlagt wird, welcher der Durchlaßöffnung des Druckblocks (G) entnommen wird. Die Zuführung und Abführung kann auch über einen einzigen der beiden Druckblöcke erfolgen, dieser hat dann zwei öffnungen und der andere keine Öffnung. Eine entsprechende Durchführung bzw. Rückführung durch Deckmasken und Rasteranordnung(en) muß selbstverständlich eingerichtet sein. Die Durchlaßöffnungen und die Abnahmepunkte sind im Bereich der Projektion der Rasterfläche in Richtung einer orthogonalen zur Rasterfläche angeordnet, wobei die Deckmasken mit allen Rasterelementen der Bibliothek fluchtende Deckmaskenöffnungen aufweisen. Die Vorrichtung kann im einzelnen zur parallelen Prozessierung, wie z.B. Klonieren nach Figur 7, Kopieren nach Figur 8 oder zur parallelen Erfassung von Molekül-Wechselwirkungen verwendet werden. Flüssigkeiten oder Gase werden durch den Druckblock (A) zur Verteilungsmaske (B) zur Deckmaske (C) zur Rasteranordnung (D) zur Deckmaske (E) zur Verteilungsmaske (F) und schließlich durch den Druckblock (G) geführt. Die Zuführung und Abführung der Flüssigkeiten oder Gase kann auch an den Verteilungsmasken erfolgen. Die Verteilungsmasken haben vorzugsweise äquidistante Verteilungswege. Durch Druck auf die Blöcke (A) und (G) wird ein seitliches Austreten der Flüssigkeiten oder Gase verhindert. Die Vorrichtung zur parallelen Durchströmung besitzt für einige Anwendungen (z.B. Klonierung von Nukleinsäuren mit geringer Konzentration oder Quantifizierung der Genexpression durch Hybridisierung) den Nachteil, daß ein bestimmtes Molekül nur mit einem Rastelement in Kontakt kommt. Dieser Nachteil kann durch beliebig häufiges Mischen und Rückführen der Flüssigkeiten oder Gase umgangen werden. Mit der Vorrichtung können auch Wechselwirkungen von Molekülen miteinander (z.B. Nukleinsäuren oder Proteine untereinander oder Nukleinsäuren mit Proteinen/Peptiden oder anderen Molekülklassen, wie Kohlenhydrate, Lipide oder niedermolekulare Stoffe) erfaßt werden. Der Analyt wird in nachweisbarer Form (z.B. fluoreszent, luminiszent oder isotopenmarkiert) der Rasteranordnung zugeführt. In der Rasteranordnung liegen Nukleinsäuren oder Proteine/Peptide oder Produkte enzymatischer Reaktionen immobilisiert vor. Bei der Ausbildung eines spezifischen Komplexes kann durch Messung eine spezifische Wechselwirkung zugeordnet werden. Alternativ kann ein Komplex untersucht werden, wobei eine Komponente des Komplexes immobilisiert vorliegt, die andere ist markiert. Bei der Verdrängung des Analyten entstehen meßbare Signale. Diese Ausführungsform dient z.B. zur Identifizierung von Rezeptorantagonisten. Die Verwendung von mehren übereinanderliegenden Rasteranordnungen (D) erlaubt die simultane Erfassung von Gruppen-Wechselwirkungen. Die Wechselwirkungen von Proteinen im Bereich der funktionellen Genomik können damit schneller als mit bekannten Verfahren erfaßt werden. So kann z.B. eine humane cDNA-Bank nach dem in Figur 11 beschriebenen Verfahren permutiert werden. Die permutierten Rasteranordnungen werden nach dem in Figur 3 beschriebenen Verfahren exprimiert, wobei die Proteine markiert (z.B. radioaktiv) und konditional immobilisiert (z.B. His-Tag) werden (humane Donorbank). Mehrere (z.B. 100) der permutierten Donor-Rasteranordnungen werden dann in der Vorrichtung mit einer Rezeptor-Rasteranordnung, die mit immobilisierten Humanproteinen beschichtet ist, in Kontakt gebracht. Nach Zugabe einer Flüssigkeit, die die konditionale Immobilisierung aufhebt (z.B. Ni2+-Ionen) können die mobilisierten Proteine aus den Donor-Rasteranordnungen mit den immobilisierten Proteinen in der Rezeptor-Rasteranordnung wechselwirken. Nach Waschen und Messen der Rezeptor-Rasteranordnung kann somit simultan die Wechselwirkung sämtlicher Rezeptor-Proteine mit jeweils 100 Donor-Proteinen erfaßt werden. Weiterhin kann z.B. die humane Donorbank mit Rezeptor-Rasteranordnungen aus beliebigen Viren, Prokaryonten oder Eukaryonten in Kontakt gebracht werden. Diese Vorgehensweise erlaubt die schnelle Identifizierung von viralen, prokaryontischen oder eukaryontischen Nukleinsäuren,Proteinen oder Peptiden, die mit Humanproteinen in affine und spezifische Wechselwirkung treten können und somit mögliche Kandidaten für die Diagnostik- oder Wirkstoffentwicklung sind. Zudem können die Donorbanken mit kombinatorischen Nukleinsäure-, Protein- oder Peptidbibliotheken in Kontakt gebracht werden. Die Nukleinsäuren, Proteine oder Peptide können auch nur in Teilbereichen randomisiert sein. In einer weiteren Ausführungsform werden Humanproteine in Kavitäten randomisiert, die von humanen Antikörpern nicht penetriert werden können. Obwohl bei dieser Vorgehensweise die Hürde für die erfolgreiche Identifizierung von Kandidaten erhöht wird, wird die Wahrscheinlichkeit erniedrigt, daß die Diagnostik- und Wirkstoffkandidaten adverse Immunreaktionen beim Patienten hervorrufen.

Die Figur 22 beschreibt eine Vorrichtung zur sequentiellen Durchströmung einer oder mehrerer Matrices mit Verwendung einer erfindungsgemäßen Nukleinsäurebibliothek oder Protein- oder Peptidbibliothek in einem Verfahren zum Prozessieren, insbesondere zum Klonieren oder Kopieren von Nukleinsäuren oder zur Untersuchung von Wechselwirkungen zwischen Molekülen, wobei die Rasterelemente der Nukleinsäurebibliothek oder Protein- oder Peptidbibliothek seriell mit einer Lösung enthaltend Reagenzien und/oder prospektiv wechselwirkende Moleküle durchströmt werden, wobei folgende Anordnung getroffen ist: ein Druckblock (G) ohne Durchlaßöffnung, eine Verteilermaske (F) mit jeweils zwei Rasterelemente der Bibliothek miteinander verbindenden Kanälen, welche in einer Ebene parallel zur Rasterfläche verlaufen, optional eine Deckmaske (E), die Nukleinsäurebibliothek (D) oder die Protein- oder Peptidbibliothek mit beidseitig offenen Rasterelementen, optional eine Deckmaske (C), eine Verteilermaske (B) mit jeweils zwei Rasterelemente der Bibliothek verbindenden Kanälen, welche in einer Ebene parallel zur Rasterfläche verlaufen, wobei die Kanäle der Verteilermaske (B) ausschließlich solche Rasterelemente miteinander verbinden, die nicht durch die Verteilermaske (F) miteinander verbunden sind, und wobei die Verteilermaske (B) eine Einlaßöffnung und eine Auslaßöffnung aufweist, welche mit lediglich einem Rasterelement verbunden sind, ein Druckblock (A) mit zwei Durchlaßöffnungen, welche jeweils mit der Auslaßöffnung und der Einlaßöffnung der Verteilermaske (B) verbunden sind, wobei die Durchlaßöffnungen und die Auslaß bzw. Einlaßöffnung vorzugsweise miteinander fluchten auf einer Linie orthogonal zur Rasterfläche und wobei die mit der Einlaßöffnung der Verteilermaske (B) verbundene Durchlaßöffnung des Druckblocks (A) mit einem Volumenstrom der Lösung beaufschlagt wird, welcher der mit der Auslaßöffnung der Verteilermaske (B) verbundenen Durchlaßöffnung des Druckblocks (A) entnommen wird. Alternativ können Zufuhr und Abfuhr analog der Fig. 21 beidseitig der Gesamtanordnung erfolgen. Die Durchlaßöffnungen und die Einlaß- und Auslaßöffnungen sind im Bereich der Projektion der Rasterfläche in Richtung einer orthogonalen zur Rasterfläche angeordnet, wobei die Deckmasken, sofern eingerichtet, mit allen Rasterelementen der Bibliothek fluchtende Deckmaskenöffnungen aufweisen. Die sequentielle Duchströmung einer Matrix hat den Vorteil, daß die Rasterelemente nacheinander durchströmt werden. Flüssigkeiten oder Gase werden durch den Druckblock (A) zur Verteilungsmaske (B) zur Deckmaske (C) zur Rasteranordnung (D) zur Deckmaske (E) zur Verteilungsmaske (F) und schließlich durch den Druckblock (A) zurückgeführt. Auch hier kann die Zuführung und Abführung der Flüssigkeiten oder Gase an den Verteilungsmasken erfolgen. Durch Druck auf die Blöcke (A) und (G) wird ein seitliches Austreten der Flüssigkeiten oder Gase verhindert. Die sequentielle Durchströmung hat gegenüber der parallelen Durchströmung den weiteren Vorteil, daß beliebig viele Rasterelemente einer Rasteranordnung miteinander in Kontakt gebracht werden können, wobei die Reihenfolge der Wechselwirkungen durch die beliebig geformten Vereilungsmasken gesteuert werden können. Damit lassen sich vorzugsweise die Spezifitäten der Molekülwechselwirkung untersuchen. So kann z.B. ein identifizierter Diagnostik- oder Wirkstoffkandidat (Nukleinsäure, Protein, Peptid, aber auch beliebige andere Moleküle) mit Rasteranodnungen einer humanen, exprimierten cDNA-Bank sowie möglichen Permutationen der Bank in Kontakt gebracht werden. Analog zur in Figur in Figur 21 beschriebenen Vorrichtung können dabei mehrere Rasteranordnungen (D) simultan getestet werden. Die Spezifität der Wechselwirkung wird somit im Kontext des humanen Genoms schnell getestet. Zudem können durch Variation der Flußrate und beliebig häufiges Mischen und Rückführen der Flüssigkeiten oder Gase die kinetischen und thermodynamischen Parameter der Wechselwirkung vollständig erfaßt werden.

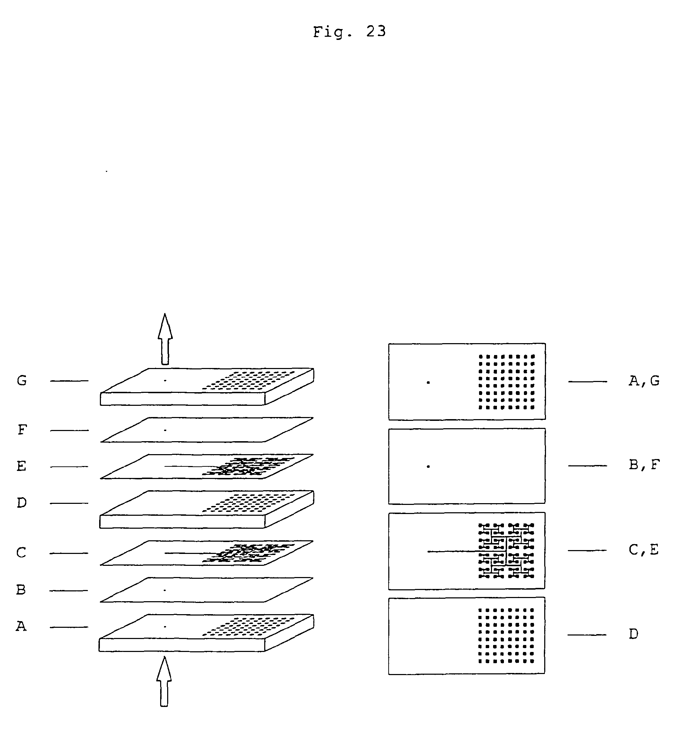

Die Figur 23 beschreibt eine Vorrichtung zum parallelen Durchströmen einer oder beliebig vieler Rasteranordnungen unter gleichzeitiger Messung in Echtzeit. Die Vorrichtung entspricht im Kern jener der Figur 21. Die Durchlaßöffnungen und die Abnahmepunkte sind jedoch außerhalb des Bereiches der Projektion der Rasterfläche in Richtung einer Orthogonalen zur Rasterfläche angeordnet, wobei die Deckmasken sowie die Druckblöcke mit allen Rasterelementen der Bibliothek fluchtende Öffnungen aufweisen und wobei zwischen den Druckblöcke und den Verteilermasken zusätzlich vorzugsweise transparente Einlochmasken angeordnet sind, wobei die Löcher der Einlochmasken jeweils die Durchlaßöffnungen und die Abnahmepunkte miteinander verbinden. Auch hier kann alternativ eine Rückführung durch die Bauelemente A bis D erfolgen und die Bauelemente F ung G folglich keine Durchlaßöffnung aufweisen. Die Vorrichtung wird vorzugsweise zur Quantifizierung der Genexpression und Quantifizierung von Molekül-Wechselwirkungen eingesetzt.

Die Figur 24 beschreibt eine Vorrichtung analog der Fig. 22, jedoch zum sequentiellen Durchströmen einer oder beliebig vieler Rasteranordnungen unter gleichzeitiger Messung in Echtzeit. Echtzeitmessung meint hier und im Rahmen der Fig. 23 beispielsweise die Analyse mittels optischer Methoden im Wege der Durchstrahlung oder Anregung von einer Seite und Analyse von der anderen Seite. Die Transparenz der Ein- oder zweilochmasken muß auf die zur Analyse verwendeten Strahlung abgestimmt sein. Die Durchlaßöffnungen und die Einlaß- und Auslaßöffnungen sind außerhalb des Bereiches der Projektion der Rasterfläche in Richtung einer Orthogonalen zur Rasterfläche angeordnet, wobei die Deckmasken sowie die Druckblöcke mit allen Rasterelementen der Bibliothek fluchtende Öffnungen aufweisen und wobei zwischen den Druckblöcken und den Verteilermasken zusätzlich vorzugsweise transparente Ein- oder Zweilochmasken angeordnet sind, wobei die Löcher der Ein- odr Zweilochmasken jeweils die Durchlaßöffnungen und die zugeordnete Einlaß- bzw. Auslaßöffnung miteinander verbinden.
Die Vorrichtung wird vorzugsweise Quantifizierung von Molekül-Wechselwirkungen im Kontext konkurrierender Wechselwirkungen eingesetzt.

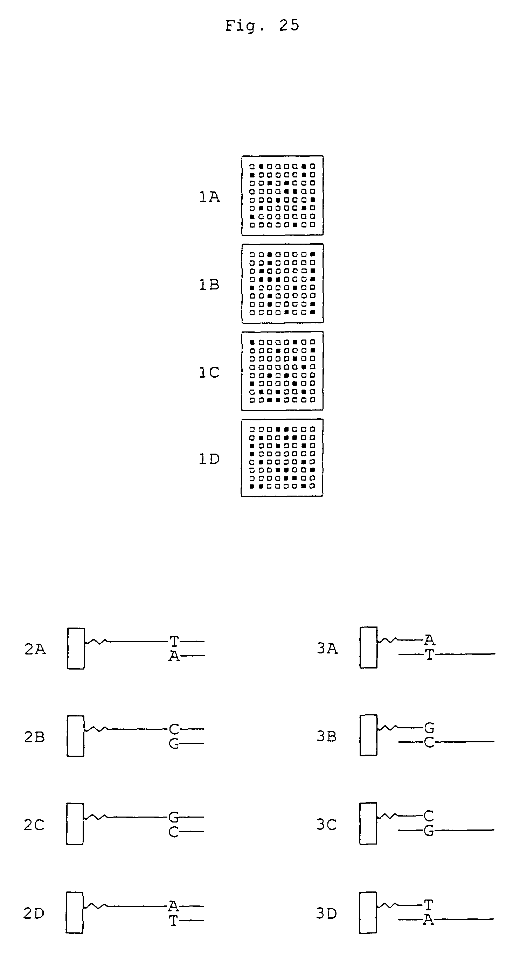

Die Figur 25 zeigt eine Ausführungsform der Erfindung zur parallelen Sequenzierung von Nukleinsäuren, Proteinen oder Peptiden. Im Verfahren wird der sequentielle Auf- oder Abbau der Moleküle genutzt. Nukleinsäure-Sequenzierung: Der angelagerte Primer kann mit nur einem, zwei oder drei zugegebenen Nukleosidtriphosphaten bzw. deren Analoga partiell verlängert werden. Dieser Verfahrensschritt kann zur parallelen Sequenzierung sämtlicher Nukleinsäure-Rasterelemente genutzt werden. Aufeinanderfolgende, identische Nukleotidpositionen können über die Intensität der Einbaureaktion erfaßt werden. In einer bevorzugten Ausführungsform der Erfindung werden konditionale Terminatoren verwendet. In analoger Vorgehensweise können Protein-Matrixelente durch Edmannabbau sequenziert werden.

Neben der Einbringung von Nukleinsäuren durch die vorstehende beschriebenen Methoden, können diese auch durch Aerosole in Rasterelemente eingebracht werden. Hierzu wird die in die Rasterelemente einzubringende Lösung zerstäubt und beispielsweise mit einem Gasstrom durch bzw. in die Rasterelemente transportiert.

Nicht in den Figuren dargestellt ist die Möglichkeit der Immobilisierung des Gegenstrangs durch vertikale oder horizontale Kopie. Ebenfalls nicht dargestellt ist das Übertragen von Genprodukten durch vertikale oder horizontale Kopie. Dies vermeidet Störsignale durch Präsenz von Nukleinsäuren. Beispiel: Biotin-Labeling von RNA oder Protein, Bindung an Avidin/Streptavidin.

## Patentansprüche

1. Nukleinsäurenbibliothek oder Protein- oder Peptidbibliothek in Form einer zweidimensional ortsaufgelösten Rasteranordnung mit einer Vielzahl von Rasterelementen, wobei jedes Rasterelement im statistischen Mittel eine definierte Anzahl von Nukleinsäuretypen oder Peptid- oder Proteintypen mit jeweils spezifischem Sequenzaufbau enthält, wobei die Rasterelemente als Kapillarhohlräume mit zumindest einer Öffnung an einem Ende ausgebildet sind, wobei die Kapillarachsen der Kapillarhohlräume parallel zueinander stehen und wobei die Öffnungen verschiedener Kapillarhohlräume in einer vorzugsweise planaren Rasterfläche mit gleichförmigem Rastermaß der Öffnungen angeordnet sind.

2. Nukleinsäurenbibliothek oder Protein- oder Peptidbibliothek nach Anspruch 1,
wobei die Rasterelemente als im wesentlichen zylinderförmig geformte Kapillarhohlräume ausgebildet sind, und wobei vorzugsweise die Kapillarachsen der Rasterelemente orthogonal zu der Rasterfläche stehen, und/oder
wobei das Verhältnis der Länge zur Breite der Kapillarhohlräume im Bereich von 2 bis 500, vorzugsweise von 2 bis 20, höchstvorzugsweise von 5 bis 10 beträgt, und/oder
wobei die Breite der Kapillarhohlräume im Bereich von 0, 1µm bis 1000µm, vorzugsweise von 0, 1µm bis 100µm, höchstvorzugsweise von 0,1µm bis 10µm, liegt und/oder
wobei die laterale Dichte der Rasterelemente im Bereich von 1/mm² bis 10⁸/mm², vorzugsweise von 10²/mm² bis 10⁸/mm², höchstvorzugsweise von 10⁴/mm² bis 10⁸/MM², liegt, und/oder
wobei die Kapillarhohlräume beidendig offen sind und wobei die jeweils einander gegenüberliegenden Öffnungen zueinander parallele Rasterflächen bilden, und/oder
wobei das Strukturmaterial der Rasterelemente ausgewählt ist aus der Gruppe bestehend aus "metallische Werkstoffe, oberflächenpassivierte metallische Werkstoffe, Keramikwerkstoffe, Glaswerkstoffe, Polymerwerkstoffe und Kombinationen dieser Werkstoffe", und/oder
wobei die Rasterelemente oberflächenmodifiziert sind mit Ankerstellen, vorzugsweise mit kovalenten Bindungsstellen, für Nukleinsäuren oder Proteine oder Peptide.

3. Verfahren zur Herstellung einer Nukleinsäurenbibliothek in Form einer zweidimensional ortsaufgelösten Rasteranordnung mit einer Vielzahl von Rasterelementen, wobei jedes Rasterelement im statistischen Mittel eine definierte Anzahl von Nukleinsäuretypen mit jeweils spezifischer Sequenzinformation enthält, und wobei in verschiedene Rasterelemente eingebrachte Fluide nicht miteinander kommunizieren, mit folgenden Verfahrensschritten:
a) es wird eine zweidimensionale Rasteranordnung aus als Öffungen aufweisende Hohlräume ausgebildeten Rasterelementen gebildet,
b) die Öffnungen der Hohlräume werden mit einer verschiedene Nukleinsäuren enthaltenden Lösung in Kontakt gebracht, wobei unter Mitwirkung von Kapillarkräften in jedes Rasterelement eine Teilmenge der Lösung angesaugt wird,
c) die Öffnungen der Hohlräume werden von der Lösung getrennt,
d) es wird eine Trocknungsverfahrenstufe durchgeführt,
e) und, optional, die Rasteranordnung wird insgesamt einer Amplifikationsverfahrensstufe unterworfen,
wobei die Konzentration der Nukleinsäuren in der Lösung und die Dimensionierung der Hohlräume und deren Öffnungen in Hinblick auf die Größe der in ein Rasterelement angesaugten Teilmenge an Lösung mit der Maßgabe aufeinander abgestimmt sind, daß die in ein Rasterelement aufgesaugte Teilmenge an Lösung im statistischen Mittel eine definierte Anzahl an Nukleinsäuremolekülen enthält.

4. Verfahren zum Kopieren einer Nukleinsäurenbibliothek nach einem der Ansprüche 1 bis 2 oder erhältlich nach Anspruch 3, wobei alle oder ein Teil der Rasterelemente einer mit Nukleinsäuren beladenen Rasteranordnung und alle oder ein Teil der Rasterelemente einer leeren Rasteranordnung in definierter Ausrichtung der jeweiligen Rasterflächen zueinander hinsichtlich der zweidimensionalen Ortsauflösung mit ihren jeweiligen Öffnungen miteinander verbunden werden, wobei entweder dann a) ggf. eine Mobilisierung der Nukleinsäuren in der beladenen Rasteranordnung durchführt wird, b) eine Reaktionslösung für eine Amplifikationsverfahrenstufe in die miteinander verbundenen Rasterelemente der beiden Rasteranordnungen eingebracht wird, und c) eine Amplifikationsverfahrensstufe durchgeführt wird, oder dann eine Übertragung von Nukleinsäuren in verbundene Rasterelemente der leeren Rasteranordnung durch a') ggf. eine Mobilisierung der Nukleinsäuren in der beladenen Rasteranordnung, und b') ein Transport der mobilisierten Nukleinsäuren aus der beladenen Rasteranordnung in die leere Rasteranordnung durchgeführt wird, wobei dann die beiden Rasteranordnungen voneinander getrennt werden, und wobei optional vor oder nach der Trennung eine Immobilisierung der Nukleinsäuren in der zuvor leeren Rasteranordnung durchgeführt wird.

5. Verfahren nach Anspruch 4,
wobei lediglich ein Teil der Rasterelemente der beladenen Rasteranordnung mit einem Teil der Rasterelemente der leeren Rasteranordnung durch Zwischenschaltung einer Rastermaske zwischen die beiden Rasteranordnungen verbunden wird, wobei die Anzahl von Rasterdurchlaßöffnungen der Rastermaske kleiner als die Anzahl der Rasterelemente der beladenen Rasteranordnung ist, wobei optional der Schritt der Verbindung eines Teils der Rasterelemente der Rasteranordnungen wiederholt wird und wobei vor jeder Wiederholung die Rastermaske und/oder eine oder beide der Rasteranordnungen um einen definierten Weg, welcher ein ganzzahliges Vielfaches n = 1, 2, 3, usw., des Mittenanstandes benachbarter Rasterelemente ist, in Richtung parallel zur Rasterfläche verschoben wird, oder
wobei zunächst eine Mehrzahl von identischen, mit Nukleinsäuren beladenen Rasteranordnungen mit gleichem lateralen Rastermaß der Rasterelemente hergestellt werden, wobei diese Rasteranordnungen nebeneinander angeordnet werden, vorzugsweise mit der Maßgabe, daß das Rastermaß der Rasteranordnungen nach der nebeneinander Anordnung über Verbindungsbereiche nebeneinanderliegender Rasteranordnungen kontinuierlich fortlaufend ist, wobei eines, mehrere oder alle Rasterelemente einer leere Rasteranordnung mit vorzugsweise gleichem Rastermaß mit korrespondierenden Rasterelementen der nebeneinander angeordneten, mit Nukleinsäuren beladenen Rasteranordnungen verbunden werden.

6. Verfahren nach einem der Ansprüche 4 oder 5, wobei die mit Nukleinsäuren beladene Rasteranordnung und die leere Rasteranordnung ein unterschiedliches Rastermaß aufweisen und wobei die Verbindung der Rasterelemente unter Zwischenschaltung zumindest einer Verkleinerungsmaske oder Vergrößerungsmaske erfolgt.

7. Verfahren nach Anspruch 4, wobei eine Einzelverbindung, beispielsweise über eine Kapillare, zwischen einem Rasterelement der beladenen Rasteranordnung und einem Rasterelement der leeren Rasteranordnung hergestellt wird, und wobei durch subsequentes definiertes laterales Verschieben der Einzelverbindung und/oder eines und/oder beider Rasterelemente die Rasterelemente der leeren Rasteranordnung nacheinander mit Nukleinsäuren aus den Rasterelementen der beladenen Rasteranordnung beladen werden.

8. Verfahren nach Anspruch 4, wobei zwischen die beladene Rasteranordnung und die leere Rasteranordnung folgende Bauelemente zwischengeschaltet werden:
a) optional, eine Deckmaske,
b) eine Verteilermaske, vorzugsweise mit äquidistanter Verteilerwegführung bezüglich eines Abnahmepunktes und in einer Ebene parallel zur Rasterfläche,
c) eine Punktmaske mit einer einzelnen Durchlaßöffnung,
d) eine Verteilermaske, vorzugsweise mit äquidistanter Verteilerwegführung bezüglich eines Abnahmepunktes und in einer Ebene parallel zur Rasterfläche, und
e) optional, eine Deckmaske,
wobei die Abnahmepunkte der Verteilermasken mit der Durchlaßöffnung der Punktmaske verbunden sind, wobei eine Übertragung der Nukleinsäuren eines Rasterelements der beladenen Rasteranordnung auf ein Rasterelement der leeren Rasteranordnung **dadurch** erfolgt, daß das ausgewählte Rasterelement der beladenen Rasteranordnung mit einem Fluidstrom beaufschlagt wird und daß gleichzeitig das ausgewählte Rasterelement der leeren Rasteranordnung für einen Fluidstrom auf durchlässig geschaltet wird, und wobei ggf. die Schritte der Fluidstrombeaufschlagung und der Durchlässigschaltung für gewünschte verschiedene Rasterelemente der beiden Rasteranordnungen wiederholt werden.

9. Verwendung einer Nukleinsäurebibliothek oder Protein- oder Peptidbibliothek nach einem der Ansprüche 1 bis 3 oder erhältlich nach Anspruch 3 in einem Verfahren zum Prozessieren, insbesondere zum Klonieren oder Kopieren von Nukleinsäuren oder zur Untersuchung von Wechselwirkungen zwischen Molekülen, wobei die Rasterelemente der Nukleinsäurebibliothek oder Protein- oder Peptidbibliothek parallel mit einer Lösung enthaltend Reagenzien und/oder prospektiv wechselwirkende Moleküle durchströmt werden, wobei folgende Anordnung getroffen ist:
a) ein Druckblock in Ausbildung einer Punktmaske mit einer einzelnen Durchlaßöffnung,
b) eine Verteilermaske, vorzugsweise mit äquidistanter Verteilerwegführung bezüglich eines Abnahmepunktes und in einer Ebene parallel zur Rasterfläche,
c) optional eine Deckmaske,
d) die Nukleinsäurebibliothek oder die Protein- oder Peptidbibliothek mit beidseitig offenen Rasterelementen,
e) optional eine Deckmaske,
f) eine Verteilermaske, vorzugsweise mit äquidistanter Verteilerwegführung bezüglich eines Abnahmepunktes und in einer Ebene parallel zur Rasterfläche,
g) ein Druckblock in Ausbildung einer Punktmaske mit einer einzelnen Durchlaßöffnung,
wobei die Durchlaßöffnungen und die Abnahmepunkte vorzugsweise miteinander fluchten auf einer Linie orthogonal zur Rasterfläche und wobei die Durchlaßöffnung des Druckblocks a) mit einem Volumenstrom der Lösung beaufschlagt wird, welcher der Durchlaßöffnung des Druckblocks g) entnommen wird.

10. Verwendung nach Anspruch 9, wobei die Durchlaßöffnungen und die Abnahmepunkte im Bereich der Projektion der Rasterfläche in Richtung einer orthogonalen zur Rasterfläche angeordnet sind, und wobei die Deckmasken, sofern eingerichtet, mit allen Rasterelementen der Bibliothek fluchtende Deckmaskenöffnungen aufweisen.

11. Verwendung nach Anspruch 9, wobei die Durchlaßöffnungen und die Abnahmepunkte außerhalb des Bereiches der Projektion der Rasterfläche in Richtung einer Orthogonalen zur Rasterfläche angeordnet sind, und wobei die Deckmasken, sofern eingerichtet, sowie die Druckblöcke mit allen Rasterelementen der Bibliothek fluchtende Öffnungen aufweisen und wobei zwischen den Druckblöcke und den Verteilermasken zusätzlich vorzugsweise transparente Einlochmasken angeordnet sind, wobei die Löcher der Einlochmasken jeweils die Durchlaßöffnungen und die Abnahmepunkte miteinander verbinden.

12. Verwendung einer Nukleinsäurebibliothek oder Protein- oder Peptidbibliothek nach einem der Ansprüche 1 bis 2 oder erhältlich nach Anspruch 3 in einem Verfahren zum Prozessieren, insbesondere zum Klonieren oder Kopieren von Nukleinsäuren oder zur Untersuchung von Wechselwirkungen zwischen Molekülen, wobei die Rasterelemente der Nukleinsäurebibliothek oder Protein- oder Peptidbibliothek seriell mit einer Lösung enthaltend Reagenzien und/oder prospektiv wechselwirkende Moleküle durchströmt werden, wobei folgende Anordnung getroffen ist:
a) ein Druckblock ohne Durchlaßöffnung,
b) eine Verteilermaske mit jeweils zwei Rasterelemente der Bibliothek miteinander verbindenden Kanälen, welche in einer Ebene parallel zur Rasterfläche verlaufen,
c) optional eine Deckmaske,
d) die Nukleinsäurebibliothek oder die Protein- oder Peptidbibliothek mit beidseitig offenen Rasterelementen,
e) optional eine Deckmaske,
f) eine Verteilermaske mit jeweils zwei Rasterelemente der Bibliothek verbindenden Kanälen, welche in einer Ebene parallel zur Rasterfläche verlaufen, wobei die Kanäle der Verteilermaske f) ausschließlich solche Rasterelemente miteinander verbinden, die nicht durch die Verteilermaske b) miteinander verbunden sind, und wobei die Verteilermaske f) eine Einlaßöffnung und eine Auslaßöffnung aufweist, welche mit lediglich einem Rasterelement verbunden sind,
g) ein Druckblock mit zwei Durchlaßöffnungen, welche jeweils mit der Auslaßöffnung und der Einlaßöffnung der Verteilermaske f) verbunden sind,
wobei die Durchlaßöffnungen und die Auslaß bzw. Einlaßöffnung vorzugsweise miteinander fluchten auf einer Linie orthogonal zur Rasterfläche und wobei die mit der Einlaßöffnung der Verteilermaske f) verbundene Durchlaßöffnung des Druckblocks g) mit einem Volumenstrom der Lösung beaufschlagt wird, welcher der mit der Auslaßöffnung der Verteilermaske f) verbundenen Durchlaßöffnung des Druckblocks g) entnommen wird, wobei optional
entweder die Durchlaßöffnungen und die Einlaß-und Auslaßöffnungen im Bereich der Projektion der Rasterfläche in Richtung einer orthogonalen zur Rasterfläche angeordnet sind, und wobei die Deckmasken, sofern eingerichtet, mit allen Rasterelementen der Bibliothek fluchtende Deckmaskenöffnungen aufweisen, oder
die Durchlaßöffnungen und die Einlaß- und Auslaßöffnungen außerhalb des Bereiches der Projektion der Rasterfläche in Richtung einer Orthogonalen zur Rasterfläche angeordnet sind, und wobei die Deckmasken, sofern eingerichtet, sowie die Druckblöcke mit allen Rasterelementen der Bibliothek fluchtende Öffnungen aufweisen und wobei zwischen den Druckblöcken und den Verteilermasken zusätzlich vorzugsweise transparente Ein- oder Zweilochmasken angeordnet sind, wobei die Löcher der Ein- odr Zweilochmasken jeweils die Durchlaßöffnungen und die zugeordnete Einlaß- bzw. Auslaßöffnung miteinander verbinden.

13. Verwendung einer Nukleinsäurebibliothek nach einem der Ansprüche 1 bis 2
zur Herstellung einer Protein- oder Peptidbibliothek, wobei in die Rasterelemente der Nukleinsäurebibliothek ein Expressionsmix eingebracht wird und die Expressionsreaktionen durchgeführt werden, oder
zur Herstellung eines Nukleinsäurebibliothekchips mit einem flächigen porösen oder nicht porösen Träger, wobei die Rasterfläche der Nukleinsäurebibliothek mit dem Träger in direkten oder indirekten flächigen Kontakt gebracht wird und wobei mobilisierte Nukleinsäuren simultan aus den Rasterelementen auf den Träger übertragen werden unter Aufrechterhaltung der zweidimensional ortsaufgelösten Ordnung der Nukleinsäurebibliothek, wobei optional die Übertragung mittels einer Methode ausgewählt ist aus der Gruppe bestehend aus "Migration in einem elektrischen Feld, Migration in einem magnetischen Feld, Zentrifugation, Druckdifferenz, und Kombinationen dieser Methoden", wobei weiterhin optional der Träger aus einem Werkstoff aufgebaut ist, welcher ausgewählt ist aus der Gruppe bestehend aus "halbmetallische Werkstoffe, metallische Werkstoffe, Keramikwerkstoffe, Gläser, Polymerwerkstoffe und Kombinationen dieser Werkstoffe".

14. Verwendung einer Nukleinsäurebibliothek oder einer Peptid- oder Proteinbibliothek nach einem der Ansprüche 1 bis 2 oder erhältlich nach Anspruch 3 zur Sequenzierung der in den Rasterelementen befindlichen Nukleinsäuren, Peptide oder Proteine, wobei die Nukleinäuren bzw. Peptide oder Proteine sequenziell durch in Zyklen wiederholte Anlagerung oder Abbau eines Strukturelements auf- oder abgebaut werden und in jedem Zyklus Sequenzinformation durch Nachweisreaktionen gewonnen wird.
